# EUROPEAN PATENT SPECIFICATION

(11) **EP 2 604 459 B1**
(45) Date of publication and mention of the grant of the patent: **10.08.2016**
(21) Application number: 12195406.9
(22) Date of filing: 04.12.2012
(51) Int. Cl.: B60K 6/48, B60K 6/36, B60K 6/547, F16H 63/30, F16H 3/08

(54) **Vehicle drive device**
Fahrzeugantriebsvorrichtung
Dispositif de commande de véhicule

(30) Priority: 15.12.2011 JP 2011274192
(43) Date of publication of application: 19.06.2013
(73) Proprietor: AISIN SEIKI KABUSHIKI KAISHA, Kariya-shi, Aichi 448-8650 (JP)
(72) Inventor: Ishida, Kenji, Kariya-shi, Aichi 448-8650 (JP)
(74) Representative: TBK

(56) References cited:
- FR-A1- 2 897 134
- US-A1- 2002 040 818
- US-A1- 2011 239 819

## Description

### TECHNICAL FIELD

This disclosure relates to a vehicle drive device which drives a vehicle using plural different drive sources.

### BACKGROUND DISCUSSION

In some vehicle drive devices of the related art, a vehicle is driven by plural different drive sources (an internal combustion engine and an electric motor). Generally, such vehicle drive devices have a configuration in which rotational power of an electric motor is input to a transmission system or a differential system in a vehicle drive device of the related art which drives a vehicle using only rotational power of an internal combustion engine.

However, in such a configuration, when the internal combustion engine rotates, the electric motor also rotates correspondingly (co-rotates) and thus there is significant loss during high-speed traveling. In addition, in such a configuration, when the electric motor rotates, many gears in the transmission system rotate correspondingly (co-rotate) and thus the gears are worn (sliding friction). Furthermore, there are many cases where the maximum rotation speed of the internal combustion engine does not match that of the electric motor (in particular, a high-speed rotary type electric motor) . In these cases, a gear having an intermediate gear ratio should be added and therefore transmission efficiency deteriorates. In order to solve such a problem, JP 2002-114063A (Reference 1) discloses a configuration in which an electric motor can be disconnected from an input shaft and an output shaft of a transmission system.

The following analysis is conceived by the present inventors.

However, in the configuration disclosed in Reference 1, an actuator used for disconnecting an electric motor should be added and therefore the cost of the device increases. In addition, in the configuration disclosed in Reference 1, many hollow shafts are used in a transmission system and the cost of the device may increase. In addition, in the configuration disclosed in Reference 1, when an internal combustion engine drives a vehicle during extremely low-speed traveling, a gear ratio does not match with a rotation speed of the internal combustion engine and a clutch is often half-engaged. As a result, the temperature of the clutch may increase.

The document US2002/0040818A1 shows also a vehicle drive device comprising: a first gear train that changes a rotation speed of a first input shaft, to which rotational power of an internal combustion engine is input through a clutch, so as to transmit power to an output shaft and to switch between a plurality of gear ratios; a second gear train that changes a rotation speed of a second input shaft, to which rotational power of an electric motor is input, so as to transmit power to the output shaft and has a higher gear ratio than that of the first gear train; an input-shaft-side switching mechanism that switches between a linked state and an unlinked state to the first input shaft and the second input shaft.

Thus, a need exists for a vehicle drive device in which a load applied to a clutch can be reduced during extremely low-speed traveling while suppressing an increase in the cost of the device.

### SUMMARY

According to a first aspect of this disclosure, there is provided a vehicle drive device including: a first gear train that changes a rotation speed of a first input shaft, to which rotational power of an internal combustion engine is input through a clutch, so as to transmit power to a first output shaft and to switch between a plurality of gear ratios; a second gear train that changes a rotation speed of a second input shaft, to which rotational power of an electric motor is input, so as to transmit power to a second output shaft and has a higher gear ratio than that of the first gear train; an input-shaft-side switching mechanism that switches between a linked state and an unlinked state to the first input shaft and the second input shaft; an output-shaft-side switching mechanism that switches between a linked state and an unlinked state to the first output shaft and the second output shaft; a slide member that slides in response to a switching operation of the input-shaft-side switching mechanism and the output-shaft-side switching mechanism; and an idler gear that is rotatably held at the slide member, receives rotational power of the first input shaft through the input-shaft-side switching mechanism according to a slide position of the slide member, and transmits rotational power to the second output shaft through the output-shaft-side switching mechanism.

According to the first aspect of this disclosure, the slide member is provided and thus only one or two actuators are required for operating the input-shaft-side switching mechanism, the output-shaft-side switching mechanism, and the idler gear. Therefore, even when a configuration in which a power transmission path between an internal combustion engine and an electric motor is blocked by the input-shaft-side switching mechanism and the output-shaft-side switching mechanism, is adopted, the cost can be suppressed. In addition, according to the aspect of this disclosure, the second gear train which is used as an extra low-speed gear train is driven by both an electric motor and an internal combustion engine. As a result, it is not necessary that a clutch be half-engaged during extremely low-speed traveling at a slope or in a traffic jam. Therefore, a load applied to the clutch is reduced and the clutch is not burnt out. Furthermore, according to the aspect of this disclosure, a power transmission path between an internal combustion engine and an electric motor is blocked by the input-shaft-side switching mechanism and the output-shaft-side switching mechanism. Therefore, the wear amount of gears can be reduced to a large degree.

According to a second aspect of this disclosure, there is provided the vehicle drive device according to the first aspect, wherein the second gear train includes a first drive gear that rotates along with the second input shaft, and a first driven gear that rotates along with the second output shaft and meshes with the first drive gear.

According to a third aspect of this disclosure, there is provided the vehicle drive device according to the second aspect, wherein the first gear train includes a second drive gear that rotates along with the first input shaft and has a larger diameter than that of the first drive gear, a third drive gear that rotates along with the first input shaft and has a larger diameter than that of the second drive gear, a second driven gear that is arranged so as to run idle with respect to the first output shaft and meshes with the second drive gear, a third driven gear that is arranged so as to run idle with respect to the first output shaft and meshes with the third drive gear, a first switching mechanism that selects one of the second driven gear and the third driven gear and switches between a linked state and an unlinked state thereof to the first output shaft, a fourth drive gear that rotates along with the first input shaft and has a larger diameter than that of the third drive gear, a fifth drive gear that rotates along with the first input shaft and has a larger diameter than that of the fourth drive gear, a fourth driven gear that is arranged so as to run idle with respect to the first output shaft and meshes with the fourth drive gear, a fifth driven gear that is arranged so as to run idle with respect to the first output shaft and meshes with the fifth drive gear, and a second switching mechanism that selects one of the fourth driven gear and the fifth, driven gear and switches between a linked state and an unlinked state thereof to the first output shaft.

According to a fourth aspect of this disclosure, there is provided the vehicle drive device according to any one of the first to third aspects, further including: a first actuator that performs a switching operation of the input-shaft-side switching mechanism, the output-shaft-side switching mechanism, or the slide member, wherein the input-shaft-side switching mechanism performs a switching operation in conjunction with a switching operation of the output-shaft-side switching mechanism through the slide member, and wherein the first actuator performs a switching operation at one of: a first position in which the idler gear is connected to the input-shaft-side switching mechanism and the output-shaft-side switching mechanism, the input-shaft-side switching mechanism is in the unlinked state, and the output-shaft-side switching mechanism is in the unlinked state; a second position in which the idler gear is not connected to the input-shaft-side switching mechanism and the output-shaft-side switching mechanism, the input-shaft-side switching mechanism is in the unlinked state, and the output-shaft-side switching mechanism is in the linked state; a third position in which the idler gear is not connected to the input-shaft-side switching mechanism and the output-shaft-side switching mechanism, the input-shaft-side switching mechanism is in the linked state, and the output-shaft-side switching mechanism is in the linked state; a fourth position in which the idler gear is not connected to the input-shaft-side switching mechanism and the output-shaft-side switching mechanism, the input-shaft-side switching mechanism is in the linked state, and the output-shaft-side switching mechanism is in the unlinked state; and a fifth position in which the idler gear is not connected to the input-shaft-side switching mechanism and the output-shaft-side switching mechanism, the input-shaft-side switching mechanism is in the unlinked state, and the output-shaft-side switching mechanism is in the unlinked state.

According to a fifth aspect of this disclosure, there is provided the vehicle drive device according to the fourth aspect, further including: a second actuator that is connected through the slide member and an oil passage, wherein the slide member has a function of receiving an oil pressure, controlled by the second actuator, to shift a switching position relative to the input-shaft-side switching mechanism and the output-shaft-side switching mechanism, wherein when the slide member receives the oil pressure controlled by the second actuator, the first actuator performs a switching operation at one of: another first position in which the idler gear is not connected to the input-shaft-side switching mechanism and the output-shaft-side switching mechanism, the input-shaft-side switching mechanism is in the unlinked state, and the output-shaft-side switching mechanism is in the linked state; another second position in which the idler gear is not connected to the input-shaft-side switching mechanism and the output-shaft-side switching mechanism, the input-shaft-side switching mechanism is in the linked state, and the output-shaft-side switching mechanism is in the unlinked state; and another third position in which the idler gear is not connected to the input-shaft-side switching mechanism and the output-shaft-side switching mechanism, the input-shaft-side switching mechanism is in the unlinked state, and the output-shaft-side switching mechanism is in the unlinked state, and wherein during a movement from the another first position to the another second position, the input-shaft-side switching mechanism is in the unlinked state and the output-shaft-side switching mechanism is in the unlinked state.

According to a sixth aspect of this disclosure, there is provided the vehicle drive device according to the fifth aspect, wherein when the slide member does not receive the oil pressure, controlled by the second actuator, the first actuator performs a switching operation at one of the first position to the fifth position.

According to a seventh aspect of this disclosure, there is provided the vehicle drive device according to any one of the first to third aspects, further including: an input shaft actuator that performs a switching operation of the input-shaft-side switching mechanism; and an output shaft actuator that performs a switching operation of the output-shaft-side switching mechanism, wherein the slide member performs a slide operation at one of: a first position in which the idler gear is connected to the input-shaft-side switching mechanism and the output-shaft-side switching mechanism and both of the input-shaft-side switching mechanism and the output-shaft-side switching mechanism are in the unlinked state; a second position in which the idler gear is not connected to the input-shaft-side switching mechanism and the output-shaft-side switching mechanism and either one or both of the input-shaft-side switching mechanism and the output-shaft-side switching mechanism are in the unlinked state; and a third position in which the idler gear is not connected to the input-shaft-side switching mechanism and the output-shaft-side switching mechanism and both of the input-shaft-side switching mechanism and the output-shaft-side switching mechanism are in the linked state.

### BRIEF DESCRIPTION OF THE DRAWINGS

Fig. 1 is a block diagram schematically illustrating a configuration of a vehicle drive device according to Embodiment 1 disclosed here;
Fig. 2 is a diagram schematically illustrating a configuration of a power transmission path of the vehicle drive device according to Embodiment 1;
Fig. 3 is a table schematically illustrating each mode of the vehicle drive device according to Embodiment 1;
Figs. 4A and 4B are diagrams schematically illustrating a power transmission path of the vehicle drive device according to Embodiment 1, in which Fig. 4A illustrates a power generation mode A and Fig. 4B illustrates a power generation mode B;
Figs. 5A and 5B are diagrams schematically illustrating a power transmission path of the vehicle drive device according to Embodiment 1, in which Fig. 5A illustrates a regeneration mode A and Fig. 5B illustrates a regeneration mode B;
Figs. 6A and 6B are diagrams schematically illustrating a power transmission path of the vehicle drive device according to Embodiment 1, in which Fig. 6A illustrates a 1-speed EV mode and Fig. 6B illustrates a 1-speed ENG mode;
Figs. 7A and 7B are diagrams schematically illustrating a power transmission path of the vehicle drive device according to Embodiment 1, in which Fig. 7A illustrates a 1-speed HV mode and Fig. 7B illustrates a 2-speed EV mode;
Figs. 8A and 8B are diagrams schematically illustrating a power transmission path of the vehicle drive device according to Embodiment 1, in which Fig. 8A illustrates a 2-speed ENG mode and Fig. 8B illustrates a 2-speed HV mode;
Figs. 9A and 9B are diagrams schematically illustrating a power transmission path of the vehicle drive device according to Embodiment 1, in which Fig. 9A illustrates a 3-speed EV mode and Fig. 9B illustrates a 3-speed ENG mode;
Figs. 10A and 10B are diagrams schematically illustrating a power transmission path of the vehicle drive device according to Embodiment 1, in which Fig. 10A illustrates a 3-speed HV mode and Fig. 10B illustrates a 4-speed ENG mode;
Figs. 11A and 11B are diagrams schematically illustrating a power transmission path of the vehicle drive device according to Embodiment 1, in which Fig. 11A illustrates a 5-speed ENG mode and Fig. 11B illustrates a reverse EV mode;
Figs. 12A and 12B are diagrams schematically illustrating a power transmission path of the vehicle drive device according to Embodiment 1, in which Fig. 12A illustrates a reverse ENG mode and Fig. 12B illustrates a neutral mode;
Fig. 13 is a flowchart schematically illustrating operations when the vehicle drive device according to Embodiment 1 starts traveling;
Fig. 14 is a diagram schematically illustrating a configuration of a power transmission path of a vehicle drive device according to Embodiment 2 disclosed here;
Fig. 15 is a table schematically illustrating each mode of the vehicle drive device according to Embodiment 2;
Figs. 16A and 16B are diagrams schematically illustrating a power transmission path of the vehicle drive device according to Embodiment 2, in which Fig. 16A illustrates a power generation mode A and Fig. 16B illustrates a power generation mode B;
Figs. 17A and 17B are diagrams schematically illustrating a power transmission path of the vehicle drive device according to Embodiment 2, in which Fig. 17A illustrates a regeneration mode A and Fig. 17B illustrates a regeneration mode B;
Figs. 18A and 18B are diagrams schematically illustrating a power transmission path of the vehicle drive device according to Embodiment 2, in which Fig. 18A illustrates a 1-speed EV mode and Fig. 18B illustrates a 1-speed ENG mode;
Figs. 19A and 19B are diagrams schematically illustrating a power transmission path of the vehicle drive device according to Embodiment 2, in which Fig. 19A illustrates a 1-speed HV mode and Fig. 19B illustrates a 2-speed EV mode;
Figs. 20A and 20B are diagrams schematically illustrating a power transmission path of the vehicle drive device according to Embodiment 2, in which Fig. 20A illustrates a 2-speed ENG mode and Fig. 20B illustrates a 2-speed HV mode;
Figs. 21A and 21B are diagrams schematically illustrating a power transmission path of the vehicle drive device according to Embodiment 2, in which Fig. 21A illustrates a 3-speed EV mode and Fig. 21B illustrates a 3-speed ENG mode;
Figs. 22A and 22B are diagrams schematically illustrating a power transmission path of the vehicle drive device according to Embodiment 2, in which Fig. 22A illustrates a 3-speed HV mode and Fig. 22B illustrates a 4-speed ENG mode;
Figs. 23A and 23B are diagrams schematically illustrating a power transmission path of the vehicle drive device according to Embodiment 2, in which Fig. 23A illustrates a 5-speed ENG mode and Fig. 23B illustrates a reverse EV mode;
Figs. 24A and 24B are diagrams schematically illustrating a power transmission path of the vehicle drive device according to Embodiment 2, in which Fig. 24A illustrates a reverse ENG mode and Fig. 24B illustrates a neutral mode;
Fig. 25 is a flowchart schematically illustrating operations when the vehicle drive device according to Embodiment 2 starts traveling;
Fig. 26 is a diagram schematically illustrating a configuration of a power transmission path of a vehicle drive device according to Embodiment 3 disclosed here;
Fig. 27 is a diagram schematically illustrating main components regarding operations of a third switching mechanism and a fourth switching mechanism when a slide member receives an oil pressure from a fifth actuator in the vehicle drive device according to Embodiment 3; and
Fig. 28 is a table schematically illustrating each mode when the slide member receives an oil pressure from the fifth actuator in the vehicle drive device according to Embodiment 3.

### DETAILED DESCRIPTION

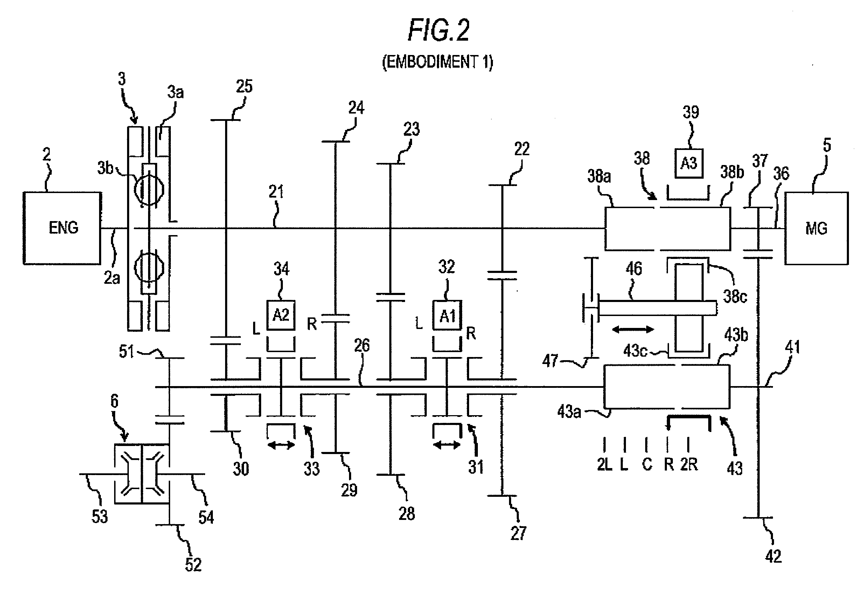

A vehicle drive device according to an embodiment disclosed here includes: a first gear train (22 to 25, 27 to 30, 31, and 33 of Fig. 2) that changes a rotation speed of a first input shaft (21 of Fig. 2), to which rotational power of an internal combustion engine (2 of Fig. 2) is input through a clutch (3 of Fig. 2), so as to transmit power to a first output shaft (26 of Fig. 2) and to switch between a plurality of gear ratios; a second gear train (37 and 42 of Fig. 2) that changes a rotation speed of a second input shaft (36 of Fig. 2), to which rotational power of an electric motor (5 of Fig. 2) is input, so as to transmit power to a second output shaft (41 of Fig. 2) and has a higher gear ratio than that of the first gear train; an input-shaft-side switching mechanism (38 of Fig. 2) that switches between a linked state and an unlined state to the first input shaft and the second input shaft; an output-shaft-side switching mechanism (43 of Fig. 2) that switches between a linked state and an unlinked state to the first output shaft and the second output shaft; a slide member (46 of Fig. 2) that slides in response to a switching operation of the input-shaft-side switching mechanism and the output-shaft-side switching mechanism; and an idler gear (47 of Fig. 2) that is rotatably held at the slide member, receives rotational power of the first input shaft through the input-shaft-side switching mechanism according to a slide position of the slide member, and transmits rotational power to the second output shaft through the output-shaft-side switching mechanism.

In the vehicle drive device according to the embodiment, it is preferable that the second gear train includes a first drive gear that rotates along with the second input shaft and a first driven gear that rotates along with the second output shaft and meshes with the first drive gear.

In the vehicle drive device according to the embodiment, it is preferable that the first gear train includes a second drive gear that rotates along with the first input shaft and has a larger diameter than that of the first drive gear, a third drive gear that rotates along with the first input shaft and has a larger diameter than that of the second drive gear, a second driven gear that is arranged so as to run idle with respect to the first output shaft and meshes with the second drive gear, a third driven gear that is arranged so as to run idle with respect to the first output shaft and meshes with the third drive gear, a first switching mechanism that selects one of the second driven gear and the third driven gear and switches between a linked state and an unlinked state thereof to the first output shaft, a fourth drive gear that rotates along with the first input shaft and has a larger diameter than that of the third drive gear, a fifth drive gear that rotates along with the first input shaft and has a larger diameter than that of the fourth drive gear, a fourth driven gear that is arranged so as to run idle with respect to the first output shaft and meshes with the fourth drive gear, a fifth driven gear that is arranged so as to run idle with respect to the first output shaft and meshes with the fifth drive gear, and a second switching mechanism that selects one of the fourth driven gear and the fifth driven gear and switches between a linked state and an unlinked state thereof to the first output shaft.

In the vehicle drive device according to the embodiment, it is preferable that a first actuator that performs a switching operation of the input-shaft-side switching mechanism, the output-shaft-side switching mechanism, or the slide member, be provided, it is preferable that the input-shaft-side switching mechanism performs a switching operation in conjunction with a switching operation of the output-shaft-side switching mechanism through the slide member, and it is preferable that the first actuator performs a switching operation at one of: a first position in which the idler gear is connected to the input-shaft-side switching mechanism and the output-shaft-side switching mechanism, the input-shaft-side switching mechanism is in the unlinked state, and the output-shaft-side switching mechanism is in the unlinked state; a second position in which the idler gear is not connected to the input-shaft-side switching mechanism and the output-shaft-side switching mechanism, the input-shaft-side switching mechanism is in the unlinked state, and the output-shaft-side switching mechanism is in the linked state; a third position in which the idler gear is not connected to the input-shaft-side switching mechanism and the output-shaft-side switching mechanism, the input-shaft-side switching mechanism is in the linked state, and the output-shaft-side switching mechanism is in the linked state; a fourth position in which the idler gear is not connected to the input-shaft-side switching mechanism and the output-shaft-side switching mechanism, the input-shaft-side switching mechanism is in the linked state, and the output-shaft-side switching mechanism is in the unlinked state; and a fifth position in which the idler gear is not connected to the input-shaft-side switching mechanism and the output-shaft-side switching mechanism, the input-shaft-side switching mechanism is in the unlinked state, and the output-shaft-side switching mechanism is in the unlinked state.

In the vehicle drive device according to the embodiment, it is preferable that a second actuator that is connected through the slide member and an oil passage be provided, it is preferable that the slide member has a function of receiving an oil pressure, controlled by the second actuator, to shift a switching position relative to the input-shaft-side switching mechanism and the output-shaft-side switching mechanism, it is preferable that when the slide member receives the oil pressure controlled by the second actuator, the first actuator performs a switching operation at one of; another first position in which the idler gear is not connected to the input-shaft-side switching mechanism and the output-shaft-side switching mechanism, the input-shaft-side switching mechanism is in the unlinked state, and the output-shaft-side switching mechanism is in the linked state; another second position in which the idler gear is not connected to the input-shaft-side switching mechanism and the output-shaft-side switching mechanism, the input-shaft-side switching mechanism is in the linked state, and the output-shaft-side switching mechanism is in the unlinked state; and another third position in which the idler gear is not connected to the input-shaft-side switching mechanism and the output-shaft-side switching mechanism, the input-shaft-side switching mechanism is in the unlinked state, and the output-shaft-side switching mechanism is in the unlinked state, and it is preferable that during a movement from the first position to the second position, the input-shaft-side switching mechanism be in the unlinked state and the output-shaft-side switching mechanism is in the unlinked state.

In the vehicle drive device according to the embodiment, it is preferable that when the slide member does not receive the oil pressure, controlled by the second actuator, the first actuator perform a switching operation at one of the first position to the fifth position.

In the vehicle drive device according to the embodiment, it is preferable that an input shaft actuator that performs a switching operation of the input-shaft-side switching mechanism and an output shaft actuator that performs a switching operation of the output-shaft-side switching mechanism be provided and it is preferable that the slide member performs a slide operation at one of: a first position in which the idler gear is connected to the input-shaft-side switching mechanism and the output-shaft-side switching mechanism and both of the input-shaft-side switching mechanism and the output-shaft-side switching mechanism are in the unlinked state; a second position in which the idler gear is not connected to the input-shaft-side switching mechanism and the output-shaft-side switching mechanism and either one or both of the input-shaft-side switching mechanism and the output-shaft-side switching mechanism are in the unlinked state; and a third position in which the idler gear is not connected to the input-shaft-side switching mechanism and the output-shaft-side switching mechanism and both of the input-shaft-side switching mechanism and the output-shaft-side switching mechanism are in the linked state.

In this disclosure, reference numerals are shown in the drawings only for the purpose of better understanding and this disclosure is not limited to the forms shown in the drawings. Hereinafter, embodiments will be described with reference to the drawings.

### Embodiment 1

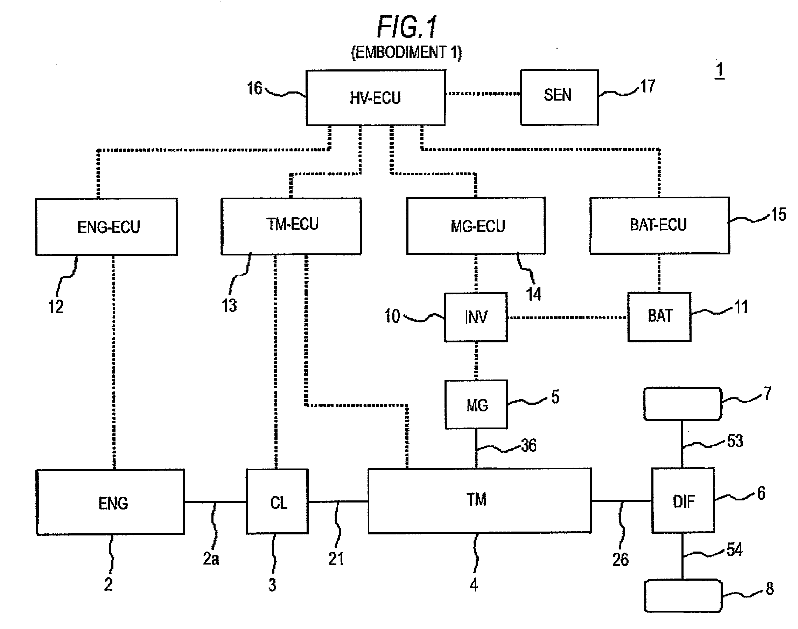

A vehicle drive device according to Embodiment 1 disclosed here will be described with reference to the drawings. Fig. 1 is a block diagram schematically illustrating a configuration of the vehicle drive device according to Embodiment 1. Fig. 2 is a diagram schematically illustrating a configuration of a power transmission path of the vehicle drive device according to Embodiment 1.

Referring to Fig. 1, a vehicle drive device 1 drives a hybrid vehicle that includes, as drive sources, an engine 2 which outputs rotational power using combustion energy of fuel and a motor generator 5 which outputs rotational power using electric energy. The vehicle drive device 1 includes a clutch 3, a transmission system 4, the motor generator 5, and a differential system 6 on a power transmission path between the engine 2 and wheels 7 and 8. As a control system for the engine 2, the clutch 3, the transmission system 4, and the motor generator 5, the vehicle drive device 1 includes an inverter 10, a battery 11, an engine controller 12, a transmission system controller 13, a motor generator controller 14, a battery controller 15, a hybrid controller 16, and a sensor 17.

The engine 2 is an internal combustion engine which outputs rotational power from a crank shaft 2a using, for example, combustion of fuel (for example, hydrocarbon-based fuel such as gasoline or light gas oil) (refer to Figs. 1 and 2). The rotational power of the crank shaft 2a is transmitted to an input-side member of the clutch 3. The engine 2 includes various sensors (for example, an engine rotation sensor) and actuators (for example, actuators for driving an injector and a throttle valve), is connected to the engine controller 12 to communicate with each other, and is controlled by the engine controller 12.

The clutch 3 is arranged on a power transmission path between the engine 2 and the transmission system 4 and can disconnect rotational power transmitted from the engine 2 to the transmission system 4 (refer to Figs. 1 and 2). The clutch 3 includes a clutch unit 3a and a damper unit 3b on a power transmission path between the crank shaft 2a and a first shaft 21. The clutch unit 3a transmits rotational power from an input side member, which rotates along with the crank shaft 2a, to an intermediate member, which is connected to an input side of the damper unit 3b, through the engagement of the input side member and the intermediate member. Engagement and disengagement operations of the clutch 3 are performed by a clutch actuator (not illustrated) which is controlled by the transmission system controller 13. The damper unit 3b absorbs, with elastic force, variable torque generated between the intermediate member, which is connected to an output side of the clutch unit 3a, and an output side member, which rotates along with the first shaft 21 of the transmission system 4.

The transmission system 4 is a gear mechanism which changes a speed of rotational power, output from either one or both of the engine 2 and the motor generator 5, to transmit power to the differential system 6 (refer to Figs. 1 and 2). The transmission system 4 includes parallel two shafts of the first shaft 21 and a second shaft 26, which is arranged substantially parallel to the first shaft 21, and further includes a parallel two-shaft type 5-speed transmission mechanism which can switch between forward traveling 5-speeds. The transmission system 4 includes, as main components, the first shaft 21, a second drive gear 22, a third drive gear 23, a fourth drive gear 24, a fifth drive gear 25, the second shaft 26, a second driven gear 27, a third driven gear 28, a fourth driven gear 29, a fifth driven gear 30, a first switching mechanism 31, a first actuator 32, a second switching mechanism 33, a second actuator 34, a third shaft 36, a first drive gear 37, a third switching mechanism 38, a third actuator 39, a fourth shaft 41, a first driven gear 42, a fourth switching mechanism 43, a fourth actuator 44, a slide member 46, and an idler gear 47.

The first shaft 21 is an input shaft, to which rotational power of the engine 2 is input, and rotates along with the output side member of the clutch 3 (refer to Figs. 1 and 2). The first shaft 21 is rotatably supported in a housing (not illustrated) of the transmission system 4. On the outer periphery of the first shaft 21, a gear 38a, the second drive gear 22, the third drive gear 23, the fourth drive gear 24, and the fifth drive gear 25 are arranged in order from the third switching mechanism 38 side. The first shaft 21 rotates along with the gear 38a, the second drive gear 22, the third drive gear 23, the fourth drive gear 24, and the fifth drive gear 25. The first shaft 21 can be disconnected from the third shaft 36 by the third switching mechanism 38.

The second drive gear 22 is a 2-speed gear which drives the second driven gear 27 (refer to Fig. 2). The second drive gear 22 rotates along with the first shaft 21. The second drive gear 22 meshes with the second driven gear 27. The diameter of the second drive gear 22 is larger than that of the first drive gear 37 and is smaller than those of the third to fifth drive gears 23 to 25.

The third drive gear 23 is a 3-speed gear which drives the third driven gear 28 8 (refer to Fig. 2). The third drive gear 23 rotates along with the first shaft 21. The third drive gear 23 meshes with the third driven gear 28. The diameter of the third drive gear 23 is larger than those of the first drive gear 37 and the second drive gear 22 and is smaller than those of the fourth drive gear 24 and the fifth drive gear 25.

The fourth drive gear 24 is a 4-speed gear which drives the fourth driven gear 29 (refer to Fig. 2). The fourth drive gear 24 rotates along with the first shaft 21. The fourth drive gear 24 meshes with the fourth driven gear 29. The diameter of the fourth drive gear 24 is larger than those of the first to third drive gears 37, 22, and 23 and is smaller than that of the fifth drive gear 25.

The fifth drive gear 25 is a 5-speed gear which drives the fifth driven gear 30 (refer to Fig. 2). The fifth drive gear 25 rotates along with the first shaft 21. The fifth drive gear 25 meshes with the fifth driven gear 30. The diameter of the fifth drive gear 25 is larger than those of the first to fourth drive gears 37 and 22 to 24 and is smaller than that of the fifth drive gear 25.

The second shaft 26 is an output shaft which outputs rotational power, which has been input to the transmission system 4 to change a speed thereof, to the differential system 6 (refer to Figs. 1 and 2). The second shaft 26 is arranged parallel to the first shaft 21. The second shaft 26 is rotatably supported in the housing (not illustrated) of the transmission system 4. On the outer periphery of the second shaft 26, the second driven gear 27, the first switching mechanism 31, the third driven gear 28, the fourth driven gear 29, the second switching mechanism 33, and the fifth driven gear 30 are arranged in order from the fourth switching mechanism 43 side. The second shaft 26 supports the second driven gear 27, the third driven gear 28, the fourth driven gear 29, and the fifth driven gear 30 so as to run idle. The first switching mechanism 31, which is arranged between the second driven gear 27 and the third driven gear 28, selects one of the second driven gear 27 and the third driven gear 28 to be linked to the second shaft 26. The second switching mechanism 33, which is arranged between the fourth driven gear 29 and the fifth driven gear 30, selects one of the fourth driven gear 29 and the fifth driven gear 30 to be linked to the second shaft 26. The second shaft 26 is attached to an output drive gear 51 at a portion closer to the engine side (the left side of Fig. 2) than the fifth driven gear 30 side, and rotates along with the output drive gear 51. The second shaft 26 can be disconnected from the fourth shaft 41 by the fourth switching mechanism 43.

The second driven gear 27 is a 2-speed gear which is driven by the second drive gear 22 (refer to Fig. 2). The second driven gear 27 is supported in the second shaft 26 so as to run idle. The second driven gear 27 can be linked to the second shaft 26 by the first switching mechanism 31. The second driven gear 27 meshes with the second drive gear 22. The diameter of the second driven gear 27 is smaller than that of the first driven gear 42 and is larger than those of the third to fifth driven gears 28 to 30.

The third driven gear 28 is a 3-speed gear which is driven by the third drive gear 23 (refer to Fig. 2). The third driven gear 28 is supported in the second shaft 26 so as to run idle. The third driven gear 28 can be linked to the second shaft 26 by the first switching mechanism 31. The third driven gear 28 meshes with the third drive gear 23. The diameter of the third driven gear 28 is smaller than those of the first driven gear 42 and the second driven gear 27 and is larger than those of the fourth driven gear 29 and the fifth driven gear 30.

The fourth driven gear 29 is a 4-speed gear which is driven by the fourth drive gear 24 (refer to Fig. 2). The fourth driven gear 29 is supported in the second shaft 26 so as to run idle. The fourth driven gear 29 can be linked to the second shaft 26 by the second switching mechanism 33. The fourth driven gear 29 meshes with the fourth drive gear 24. The diameter of the fourth driven gear 29 is smaller than those of the first to third driven gears 42, 27, and 28 and is larger than that of the fifth driven gear 30.

The fifth driven gear 30 is a 5-speed gear which is driven by the fifth drive gear 25 (refer to Fig. 2). The fifth driven gear 30 is supported in the second shaft 26 so as to run idle. The fifth driven gear 30 can be linked to the second shaft 26 by the second switching mechanism 33. The fifth driven gear 30 meshes with the fifth drive gear 25. The diameter of the fifth driven gear 30 is smaller than those of the first to fourth driven gears 42 and 27 to 29.

The first switching mechanism 31 switches between a linked state and an unlinked state of the second driven gear 27 or the third driven gear 28 to the second shaft 26 (refer to Fig. 2). The first switching mechanism 31 selects 2-speed or 4-speed. The first switching mechanism 31 is arranged between the second driven gear 27 and the third driven gear 28. When a sleeve, which is slidably spline-engaged with the second shaft 26, slides to an R side, the first switching mechanism 31 links the second driven gear 27 to the second shaft 26. When the sleeve slides to an L side, the first switching mechanism 31 links the third driven gear 28 to the second shaft 26. In a neutral position in which the sleeve is spline-engaged with only the second shaft 26, the second driven gear 27 and the third driven gear 28 can run idle with respect to the second shaft 26. A switching operation of the first switching mechanism 31 is performed by the first actuator 32.

The first actuator 32 performs a switching operation of the first switching mechanism 31 (refer to Fig. 2). The first actuator 32 causes the first switching mechanism 31 to slide the sleeve which is slidably spline-engaged with the second shaft 26. The first actuator 32 is controlled and driven by the transmission system controller (13 of Fig. 1).

The second switching mechanism 33 switches between a linked state and an unlinked state of the fourth driven gear 29 or the fifth driven gear 30 to the second shaft 26 (refer to Fig. 2). The second switching mechanism 33 selects 4-speed or 5-speed. The second switching mechanism 33 is arranged between the fourth driven gear 29 and the fifth driven gear 30. When a sleeve, which is slidably spline-engaged with the second shaft 26, slides to an R side, the second switching mechanism 33 links the fourth driven gear 29 to the second shaft 26. When the sleeve slides to an L side, the second switching mechanism 33 links the fifth driven gear 30 to the second shaft 26. In a neutral position in which the sleeve is spline-engaged with only the second shaft 26, the fourth driven gear 29 and the fifth driven gear 30 can run idle with respect to the second shaft 26. A switching operation of the second switching mechanism 33 is performed by the second actuator 34.

The second actuator 34 performs a switching operation of the second switching mechanism 33 (refer to Fig. 2). The second actuator 34 causes the second switching mechanism 33 to slide the sleeve which is slidably spline-engaged with the second shaft 26. The second actuator 34 is controlled and driven by the transmission system controller (13 of Fig. 1).

The third shaft 36 is an input shaft which receives rotational power output from the motor generator 5 (refer to Figs. 1 and 2). The third shaft 36 is coaxially arranged with the first shaft 21. The third shaft 36 is rotatably supported in the housing (not illustrated) of the transmission system 4. On the outer periphery of the third shaft 36, a gear 38b and the first drive gear 37 are arranged in order from the third switching mechanism 38 side. The third shaft 36 rotates along with the gear 38b and the first drive gear 37. The third shaft 36 can be disconnected from the first shaft 21 by the third switching mechanism 38.

The first drive gear 37 is a 1-speed gear which drives the first driven gear 42 (refer to Fig. 2). The first drive gear 37 rotates along with the third shaft 36. The first drive gear 37 meshes with the first driven gear 42. The diameter of the first drive gear 37 is smaller than those of the second to fifth drive gears 22 to 25.

The third switching mechanism 38 switches between a linked state and an unlinked state of the first shaft 21 and the third shaft 36 (refer to Fig. 2). The third switching mechanism 38 disconnects the engine 2 and the motor generator 5 from each other. The third switching mechanism 3 8 includes the gear 38a which rotates along with the first shaft 21, the gear 38b which rotates along with the third shaft 36, and a sleeve 38c which is slidably spline-engaged with the gears 38a and 38b. The third switching mechanism 38 operates in conjunction with the fourth switching mechanism 43 through the slide member 46 and slides the sleeve 38c in conjunction with a sleeve 43c of the fourth switching mechanism 43. When the sleeve 43c is set in a 2R position, the sleeve 38c is spline-engaged with only the gear 38b and the gear 38a meshes with the idler gear 47. When the sleeve 43c is set in an R position, the sleeve 38c is spline-engaged with only the gear 38b. When the sleeve 43c is set in a C position, the sleeve 38c is spline-engaged with the gears 38a and 38b. When the sleeve 43c is set in an L position, the sleeve 38c is spline-engaged with the gears 38a and 38b. When the sleeve 43c is set in a 2L position, the sleeve 38c is spline-engaged with only the gear 38a. A switching operation of the third switching mechanism 38 is performed by the third actuator 39.

The third actuator 39 performs a switching operation of the third switching mechanism 38 (the fourth switching mechanism 43 or the slide member 46 is also possible) (refer to Fig. 2). The third actuator 39 performs a switching operation of the fourth switching mechanism 43 through the third switching mechanism 38 and the slide member 46. The third actuator 39 causes the third switching mechanism 38 to slide the sleeve 38c which is slidably spline-engaged with the gears 38a and 38b. The third actuator 39 positions the idler gear 47 through the sleeve 38c and the slide member 46. The third actuator 39 is controlled and driven by the transmission system controller (13 of Fig. 1).

The fourth shaft 41 is an output shaft which outputs rotational power, output from the third shaft 36, to the second shaft 26 (refer to Fig. 2). The fourth shaft 41 is arranged parallel to the third shaft 36 and is coaxially arranged with the second shaft 26. The fourth shaft 41 is rotatably supported in the housing (not illustrated) of the transmission system 4. On the outer periphery of the fourth shaft 41, a gear 43b and the first driven gear 42 are arranged in order from the fourth switching mechanism 43 side. The fourth shaft 41 rotates along with the gear 43b and the first driven gear 42. The fourth shaft 41 can be disconnected from the second shaft 26 by the fourth switching mechanism 43.

The first driven gear 42 is a 1-speed gear which is driven by the first drive gear 37 (refer to Fig. 2). The first driven gear 42 rotates along with the fourth shaft 41. The first driven gear 42 meshes with the first drive gear 37. The diameter of the first driven gear 42 is larger than those of the second to fifth driven gears 27 to 30.

The fourth switching mechanism 43 switches between a linked state and an unlinked state of the second shaft 26 and the fourth shaft 41 (refer to Fig. 2). The fourth switching mechanism 43 disconnects the engine 2 and the motor generator 5 from each other. The fourth switching mechanism 43 includes a gear 43a which rotates along with the second shaft 26, the gear 43b which rotates along with the fourth shaft 41, and the sleeve 43c which is slidably spline-engaged with the gears 43a and 43b. The fourth switching mechanism 43 operates in conjunction with the third switching mechanism 38 through the slide member 46 and slides the sleeve 43c in conjunction with the sleeve 38c of the third switching mechanism 38. When the sleeve 43c is set in a 2R position, the sleeve 43c is spline-engaged with only the gear 43b and the gear 43a meshes with the idler gear 47. When the sleeve 43c is set in an R position, the sleeve 43c is spline-engaged with the gears 43a and 43b. When the sleeve 43c is set in a C position, the sleeve 43c is spline-engaged with the gears 43a and 43b. When the sleeve 43c is set in an L position, the sleeve 43c is spline-engaged with only the gear 43a. When the sleeve 43c is set in a 2L position, the sleeve 43c is spline-engaged with only the gear 43a. A switching operation of the fourth switching mechanism 43 is performed by the third actuator 39 through the slide member 46 and the third switching mechanism 38.

The slide member 46 makes the third switching mechanism 38, the fourth switching mechanism 43, and the idler gear 47 operate in conjunction with each other (refer to Fig. 2). The slide member 46 is slidably supported in the housing (not illustrated) of the transmission system 4. The slide member 46 slides the sleeve 38c of the third switching mechanism 38 and the sleeve 43c of the fourth switching mechanism 43 at the same time. The slide member 46 rotatably holds the idler gear 47 such that the idler gear 47 meshes with the gear 38a of the third switching mechanism 38 and the gear 43a of the fourth switching mechanism 43 when the sleeve 43c is set in the 2R position.

The idler gear 47 is a gear for transmitting rotational power of the gear 38a of the third switching mechanism 38 to the gear 43a of the fourth switching mechanism 43 (refer to Fig. 2). The idler gear 47 is used when a vehicle travels backward (in a reverse direction) using rotational power of only the engine 2. The idler gear 47 is rotatably held by the slide member 46 so as to mesh with the gear 38a of the third switching mechanism 38 and the gear 43a of the fourth switching mechanism 43 when the sleeve 43c is set in the 2R position.

The motor generator 5 is a synchronous generator-motor which operates not only as an electric motor but as a power generator (refer to Figs. 1 and 2). The motor generator 5 exchanges electric power with the battery 11 through the inverter 10. An output shaft of the motor generator 5 is linked to the third shaft 36 and rotates along with the third shaft 36. The motor generator 5 can generate power using rotational power, which is transmitted from the engine 2 through the transmission system 4, to charge the battery 11; can perform regeneration using rotational power, which is transmitted from the wheels 7 and 8 through axles 53 and 54, the differential system 6, and the transmission system 4, to charge the battery 11; and can output rotational power using electric power output from the battery 11. Various sensors such as an angle sensor (not illustrated) which detects a rotation angle of the output shaft (not illustrated and a rotation speed sensor (not illustrated) are built in the motor generator 5. The various sensors are connected to the motor generator controller 14 so as to communicate with each other. The motor generator 5 is controlled by the motor generator controller 14 through the inverter 10.

The differential system 6 transmits rotational power, input from the second shaft 26 of the transmission system 4, to the axles 53 and 54 in different amounts (refer to Figs. 1 and 2). The differential system 6 includes the output drive gear 51 which rotates along with the second shaft 26 of the transmission system 4. The differential system 6 includes a ring gear 52 which meshes with the output drive gear 51. The differential system 6 divides rotational power, input from the ring gear 52, between the axles 53 and 54 in different amounts. A shaft 53 rotates along with the wheel 7. A shaft 54 rotates along with the wheel 8.

The inverter 10 controls operations (a drive operation, a power generation operation, and a regeneration operation) of the motor generator 5 according to a control signal output from the motor generator controller 14 (refer to Fig. 1). The inverter 10 is electrically connected to the battery 11 through a buck-boost converter (not illustrated) .

The battery 11 is a rechargeable secondary battery (refer to Fig. 1). The battery 11 is electrically connected to the motor generator 5 through the buck-boost converter (not illustrated) and the inverter 10.

The engine controller 12 is a computer (electronic control unit) which controls operations of the engine 2 (refer to Fig. 1). The engine controller 12 is connected to the various actuators (not illustrated; for example, actuators for driving a throttle valve, an injector, and the like) and the various sensors (not illustrated; for example, an engine rotation sensor) which are built in the engine 2; and the hybrid controller 16 so as to communicate with each other. The engine controller 12 controls processes based on a predetermined program (including a database and a map) in response to control signals output from the hybrid controller 16.

The transmission system controller 13 is a computer (electronic control unit) which controls operations of the clutch 3 and the transmission system 4 (refer to Fig. 1). The transmission system controller 13 is connected to various actuators (including the switching mechanisms 32, 34, and 39 of Fig. 2), various sensors (not illustrated; for example, a rotation sensor), and the hybrid controller 16 so as to communicate with each other. The transmission system controller 13 controls processes based on a predetermined program (including a database and a map) in response to control signals output from the hybrid controller 16.

The motor generator controller 14 is a computer (electronic control unit) which controls operations of the motor generator 5 through the inverter 10 (refer to Fig. 1). The motor generator controller 14 is connected to the inverter 10, various sensors (not illustrated; for example, an angle sensor), and the hybrid controller 16 so as to communicate with each other. The motor generator controller 14 controls processes based on a predetermined program (including a database and a map) in response to control signals output from the hybrid controller 16.

The battery controller 15 is a computer (electronic control unit) which controls states of the battery 11 (a charge and discharge state, a temperature state, and the like) (refer to Fig. 1). The battery controller 15 is connected to the hybrid controller 16 so as to communicate with each other. The battery controller 15 controls processes based on a predetermined program (including a database and a map) in response to control signals output from the hybrid controller 16.

The hybrid controller 16 is a computer (electronic control unit) which controls operations of the engine controller 12, the transmission system controller 13, the motor generator controller 14, and the battery controller 15 (refer to Fig. 1). The hybrid controller 16 is connected to various sensors 17 (for example, a vehicle speed sensor, an accelerator opening sensor, and a road grade sensor), the engine controller 12, the transmission system controller 13, the motor generator controller 14, and the battery controller 15 so as to communicate with each other. The hybrid controller 16 monitors predetermined states (for example, a remaining battery level, a battery temperature, an inverter state, a motor generator state, an engine state, and a vehicle inclination) of a vehicle and outputs control signals to the engine controller 12, the transmission system controller 13, the motor generator controller 14, and the battery controller 15 according to the predetermined states of the vehicle based on a predetermined program (including a database and a map) . The hybrid controller 16 controls the start and stop of the engine 2 through the engine controller 12; controls an operation of the clutch 3 and switching operations of the switching mechanisms 31, 33, and 38 of Fig. 2 through the transmission system controller 13; controls the drive, power generation, regeneration operations of the motor generator 5 through the motor generator controller 14; and manages the battery 11 through the battery controller 15.

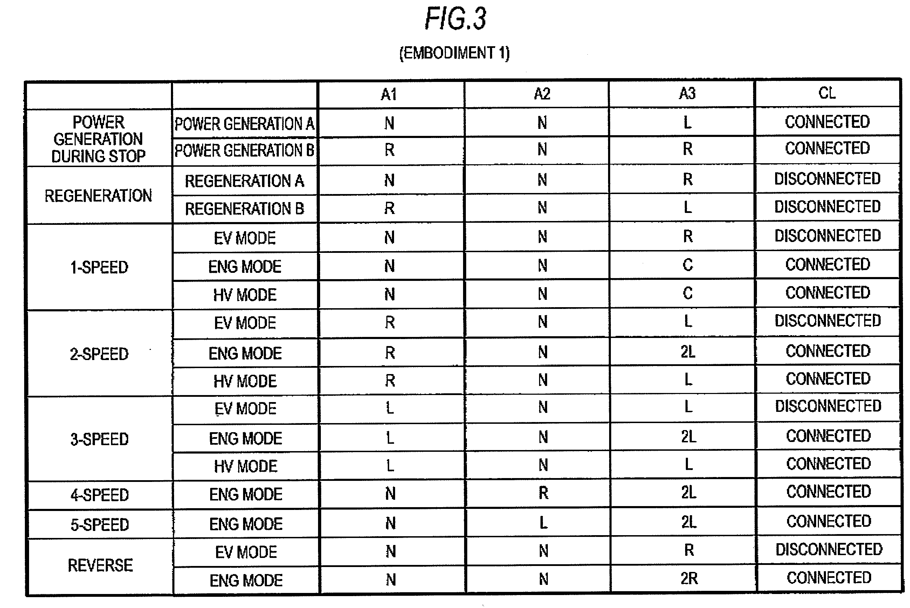

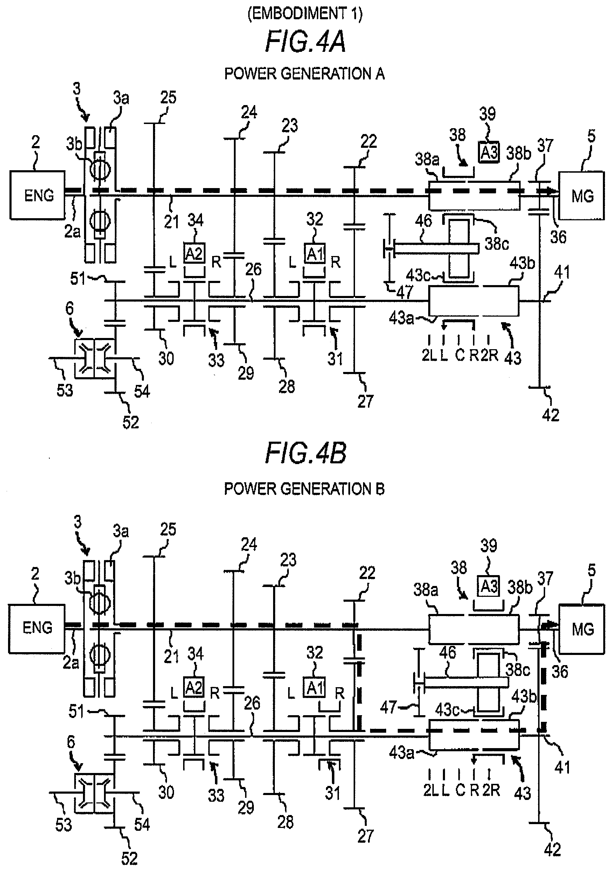

Next, each mode of the vehicle drive device according to Embodiment 1 will be described with reference to the drawings. Fig. 3 is a table schematically illustrating each mode of the vehicle drive device according to Embodiment 1. Figs. 4A to 12B are diagrams schematically illustrating a power transmission path in each mode of the vehicle drive device according to Embodiment 1.

### Power Generation A

Referring to Figs. 3 and 4A, in a power generation A mode, when a vehicle is stopped, the clutch (CL) 3 is connected (engaged), the first switching mechanism 31 (corresponding to A1) is in the N (neutral) position, the second switching mechanism 33 (corresponding to A2) is in the N (neutral) position, and the third switching mechanism 38 and fourth switching mechanism 43 (corresponding to A3) are in the L position (the third switching mechanism 38 is in the linked state and the fourth switching mechanism 43 is in the neutral position). A power transmission path is configured between the engine 2 and the motor generator 5 through the crank shaft 2a, the clutch 3, the first shaft 21, the third switching mechanism 38, and the third shaft 36. A power transmission path is not configured between the engine 2 and the differential system 6 or between the motor generator 5 and the differential system 6. In this state, when the engine 2 rotates, the motor generator 5 can generate power. In addition, in this state, when the engine 2 is stopped, the motor generator 5 can rotate to start the engine 2.

### Power Generation B

Referring to Figs. 3 and 4B, in a power generation B mode, when a vehicle is stopped, the clutch (CL) 3 is connected (engaged), the first switching mechanism 31 (corresponding to A1) is in the R (right side) position, the second switching mechanism 33 (corresponding to A2) is in the N (neutral) position, and the third switching mechanism 38 and fourth switching mechanism 43 (corresponding to A3) are in the R position (the third switching mechanism 38 is in the neutral position and the fourth switching mechanism 43 is in the linked state). A power transmission path is configured between the engine 2 and the motor generator 5 through the crank shaft 2a, the clutch 3, the first shaft 21, the second drive gear 22, the second driven gear 27, the second shaft 26, the fourth switching mechanism 43, the fourth shaft 41, the first driven gear 42, the first drive gear 37, and the third shaft 36. A power transmission path is not configured between the engine 2 and the differential system 6 or between the motor generator 5 and the differential system 6. In this state, when the engine 2 rotates, the motor generator 5 can generate power. In addition, in this state, when the engine 2 is stopped, the motor generator 5 can rotate to start the engine 2.

### Regeneration A

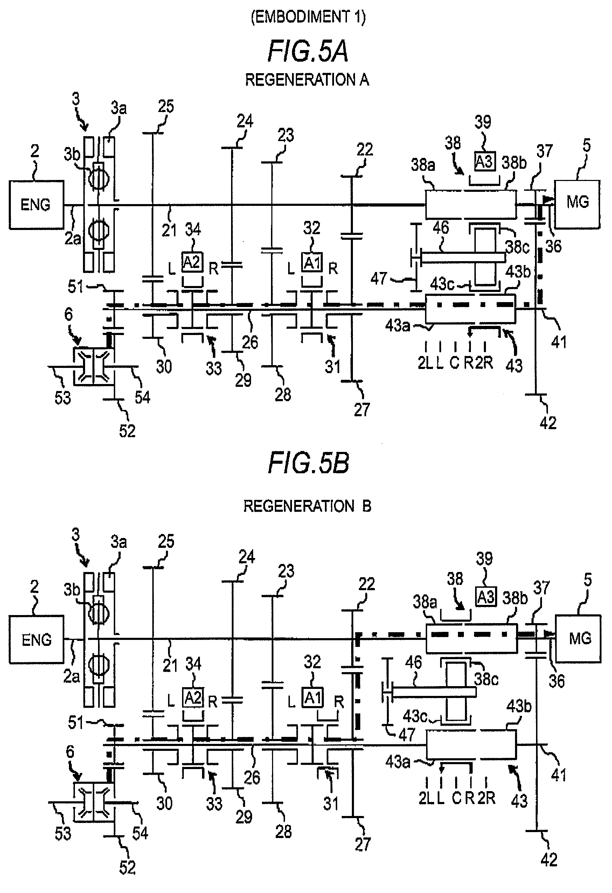

Referring to Figs. 3 and 5A, in a regeneration A mode, when a vehicle decelerates during forward traveling, the clutch (CL) 3 is disconnected (disengaged), the first switching mechanism 31 (corresponding to A1) is in the N (neutral) position, the second switching mechanism 33 (corresponding to A2) is in the N (neutral) position, and the third switching mechanism 38 and fourth switching mechanism 43 (corresponding to A3) are in the R position (the third switching mechanism 38 is in the neutral position and the fourth switching mechanism 43 is in the linked state). A power transmission path is configured between the differential system 6 and the motor generator 5 through the second shaft 26, the fourth switching mechanism 43, the fourth shaft 41, the first driven gear 42, the first drive gear 37, and the third shaft 36. A power transmission path is not configured between the engine 2 and the motor generator 5. As a result, the motor generator 5 can perform regeneration.

### Regeneration B

Referring to Figs. 3 and 5B, in a regeneration B mode, when a vehicle decelerates during forward traveling, the clutch (CL) 3 is disconnected (disengaged), the first switching mechanism 31 (corresponding to A1) is in the R (right side) position, the second switching mechanism 33 (corresponding to A2) is in the N (neutral) position, and the third switching mechanism 38 and fourth switching mechanism 43 (corresponding to A3) are in the L position (the third switching mechanism 38 is in the linked state and the fourth switching mechanism 43 is in the neutral position). A power transmission path is configured between the differential system 6 and the motor generator 5 through the second shaft 26, the first switching mechanism 31, the second driven gear 27, the second drive gear 22, the first shaft 21, the third switching mechanism 38, and the third shaft 36. A power transmission path is not configured between the engine 2 and the motor generator 5. As a result, the motor generator 5 can perform regeneration.

### 1-Speed EV

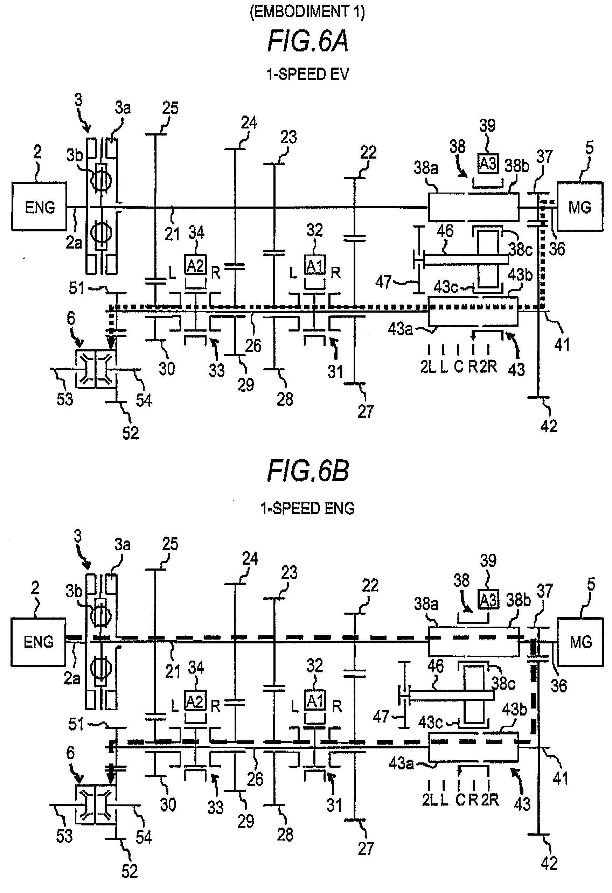

Referring to Figs. 3 and 6A, in a 1-speed EV mode, when a vehicle travels forward, the clutch (CL) 3 is disconnected (disengaged), the first switching mechanism 31 (corresponding to A1) is in the N (neutral) position, the second switching mechanism 33 (corresponding to A2) is in the N (neutral) position, and the third switching mechanism 38 and fourth switching mechanism 43 (corresponding to A3) are in the R position (the third switching mechanism 38 is in the neutral position and the fourth switching mechanism 43 is in the linked state). A power transmission path is configured between the motor generator 5 and the differential system 6 through the third shaft 36, the first drive gear 37, the first driven gear 42, the fourth shaft 41, the fourth switching mechanism 43, and the second shaft 26. A power transmission path is not configured between the engine 2 and the motor generator 5. As a result, the motor generator 5 can drive the vehicle. The EV (Electric Vehicle) mode implies that a vehicle can be driven only by the motor generator 5 for traveling.

### 1-Speed ENG

Referring to Figs. 3 and 6B, in a 1-speed ENG mode, when a vehicle travels forward, the clutch (CL) 3 is connected (engaged), the first switching mechanism 31 (corresponding to A1) is in the N (neutral) position, the second switching mechanism 33 (corresponding to A2) is in the N (neutral) position, and the third switching mechanism 38 and fourth switching mechanism 43 (corresponding to A3) are in the C position (the third switching mechanism 38 is in the linked state and the fourth switching mechanism 43 is in the linked state). A power transmission path is configured between the engine 2 and the differential system 6 through the crank shaft 2a, the clutch 3, the first shaft 21, the third switching mechanism 38, the third shaft 36, the first drive gear 37, the first driven gear 42, the fourth shaft 41, the fourth switching mechanism 43, and the second shaft 26. As a result, the engine 2 can drive the vehicle or can cause engine braking. The ENG (Engine) mode implies that a vehicle can be driven by only the engine 2 for traveling.

### 1-Speed HV

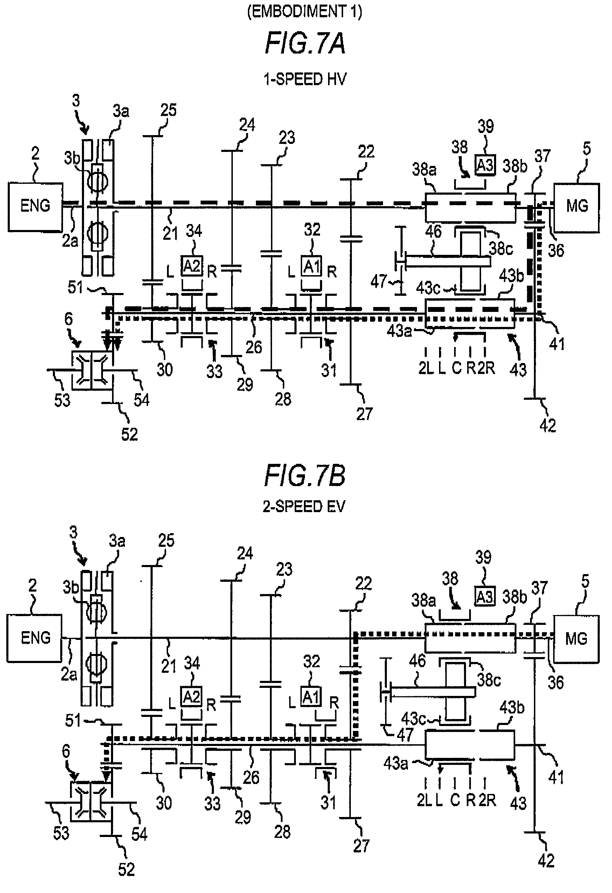

Referring to Figs. 3 and 7A, in a 1-speed HV mode, when a vehicle travels forward, the clutch (CL) 3 is connected (engaged), the first switching mechanism 31 (corresponding to A1) is in the N (neutral) position, the second switching mechanism 33 (corresponding to A2) is in the N (neutral) position, and the third switching mechanism 38 and fourth switching mechanism 43 (corresponding to A3) are in the C position (the third switching mechanism 38 is in the linked state and the fourth switching mechanism 43 is in the linked state) . A power transmission path is configured between the engine 2 and the differential system 6 through the crank shaft 2a, the clutch 3, the first shaft 21, the third switching mechanism 38, the third shaft 36, the first drive gear 37, the first driven gear 42, the fourth shaft 41, the fourth switching mechanism 43, and the second shaft 26. A power transmission path is configured between the motor generator 5 and the differential system 6 through the third shaft 36, the first drive gear 37, the first driven gear 42, the fourth shaft 41, the fourth switching mechanism 43, and the second shaft 26. As a result, the engine 2 can drive the vehicle or can cause engine braking, and the motor generator 5 can drive the vehicle, can perform regeneration, or can generate power. The HV (Hybrid Vehicle) mode implies that a vehicle can be driven by both the engine 2 and the motor generator 5 for traveling. 2-Speed EV

Referring to Figs. 3 and 7B, in a 2-speed EV mode, when a vehicle travels forward, the clutch (CL) 3 is disconnected (disengaged), the first switching mechanism 31 (corresponding to A1) is in the R (right side) position, the second switching mechanism 33 (corresponding to A2) is in the N (neutral) position, and the third switching mechanism 38 and fourth switching mechanism 43 (corresponding to A3) are in the L position (the third switching mechanism 38 is in the linked state and the fourth switching mechanism 43 is in the neutral position). A power transmission path is configured between the motor generator 5 and the differential system 6 through the third shaft 36, the third switching mechanism 38, the first shaft 21, the second drive gear 22, the second driven gear 27, the first switching mechanism 31, and the second shaft 26. A power transmission path is not configured between the engine 2 and the motor generator 5. As a result, the motor generator 5 can drive the vehicle.

### 2-Speed ENG

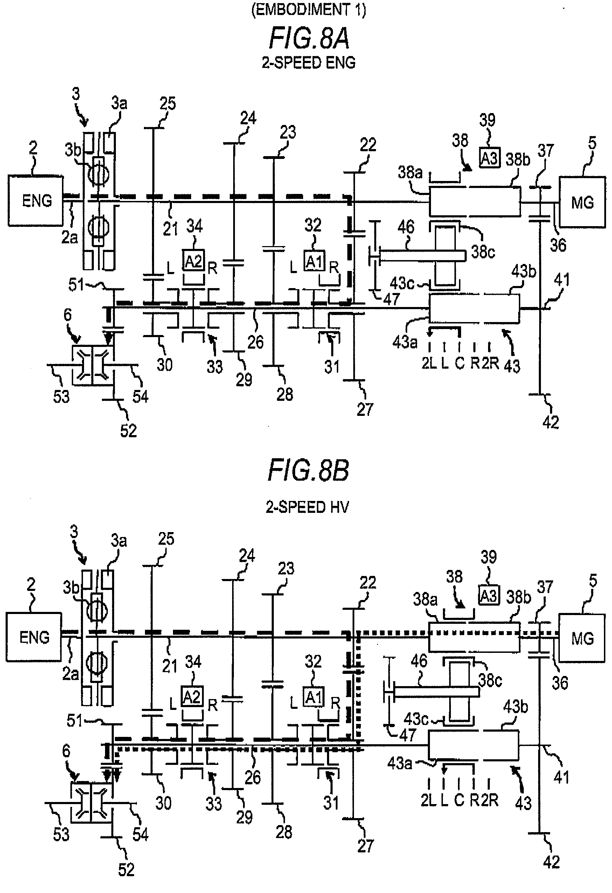

Referring to Figs. 3 and 8A, in a 2-speed ENG mode, when a vehicle travels forward, the clutch (CL) 3 is connected (engaged), the first switching mechanism 31 (corresponding to A1) is in the R (right side) position, the second switching mechanism 33 (corresponding to A2) is in the N (neutral) position, and the third switching mechanism 38 and fourth switching mechanism 43 (corresponding to A3) are in the 2L position (the third switching mechanism 38 is in the neutral position and the fourth switching mechanism 43 is in the neutral position). A power transmission path is configured between the engine 2 and the differential system 6 through the crank shaft 2a, the clutch 3, the first shaft 21, the second drive gear 22, the second driven gear 27, the first switching mechanism 31, and the second shaft 26. A power transmission path is not configured between the engine 2 and the motor generator 5. As a result, the engine 2 can drive the vehicle or can cause engine braking.

### 2-Speed HV

Referring to Figs. 3 and 8B, in a 2-speed HV mode, when a vehicle travels forward, the clutch (CL) 3 is connected (engaged), the first switching mechanism 31 (corresponding to A1) is in the R (right side) position, the second switching mechanism 33 (corresponding to A2) is in the N (neutral) position, and the third switching mechanism 38 and fourth switching mechanism 43 (corresponding to A3) are in the L position (the third switching mechanism 38 is in the linked state and the fourth switching mechanism 43 is in the neutral position). A power transmission path is configured between the engine 2 and the differential system 6 through the crank shaft 2a, the clutch 3, the first shaft 21, the second drive gear 22, the second driven gear 27, the first switching mechanism 31, and the second shaft 26. A power transmission path is configured between the motor generator 5 and the differential system 6 through the third shaft 36, the third switching mechanism 38, the first shaft 21, the second drive gear 22, the second driven gear 27, the first switching mechanism 31, and the second shaft 26. As a result, the engine 2 can drive the vehicle or can cause engine braking, and the motor generator 5 can drive the vehicle, can perform regeneration, or can generate power.

### 3-Speed EV

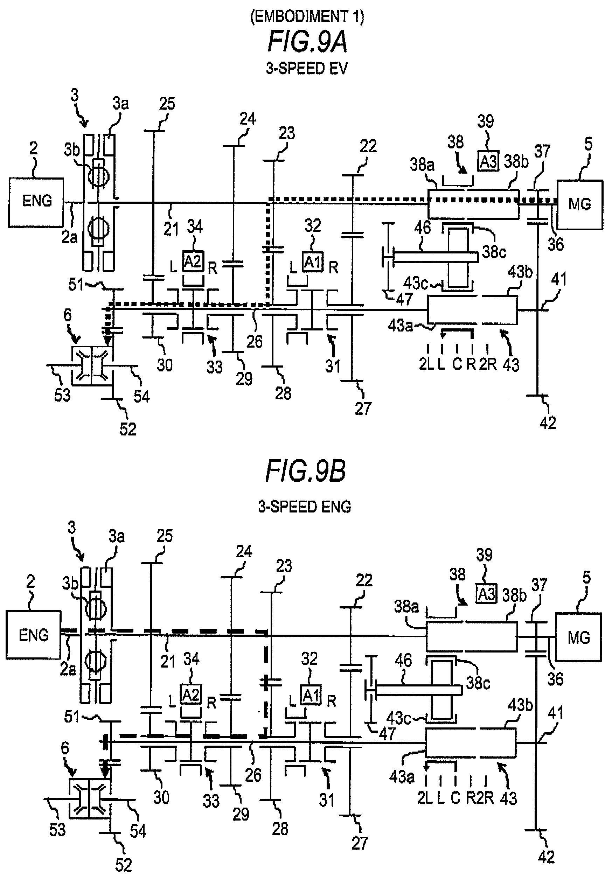

Referring to Figs. 3 and 9A, in a 3-speed EV mode, when a vehicle travels forward, the clutch (CL) 3 is disconnected (disengaged), the first switching mechanism 31 (corresponding to A1) is in the L (left side) position, the second switching mechanism 33 (corresponding to A2) is in the N (neutral) position, and the third switching mechanism 38 and fourth switching mechanism 43 (corresponding to A3) are in the L position (the third switching mechanism 38 is in the linked state and the fourth switching mechanism 43 is in the neutral position). A power transmission path is configured between the motor generator 5 and the differential system 6 through the third shaft 36, the third switching mechanism 38, the first shaft 21, the third drive gear 23, the third driven gear 28, the first switching mechanism 31, and the second shaft 26. A power transmission path is not configured between the engine 2 and the motor generator 5. As a result, the motor generator 5 can drive the vehicle or can perform regeneration.

### 3-Speed ENG

Referring to Figs. 3 and 9B, in a 3-speed ENG mode, when a vehicle travels forward, the clutch (CL) 3 is connected (engaged), the first switching mechanism 31 (corresponding to A1) is in the L (left side) position, the second switching mechanism 33 (corresponding to A2) is in the N (neutral) position, and the third switching mechanism 38 and fourth switching mechanism 43 (corresponding to A3) are in the 2L position (the third switching mechanism 38 is in the neutral position and the fourth switching mechanism 43 is in the neutral position). A power transmission path is configured between the engine 2 and the differential system 6 through the crank shaft 2a, the clutch 3, the first shaft 21, the third drive gear 23, the third driven gear 28, the first switching mechanism 31, and the second shaft 26. A power transmission path is not configured between the engine 2 and the motor generator 5. As a result, the engine 2 can drive the vehicle or can cause engine braking.

### 3-Speed HV

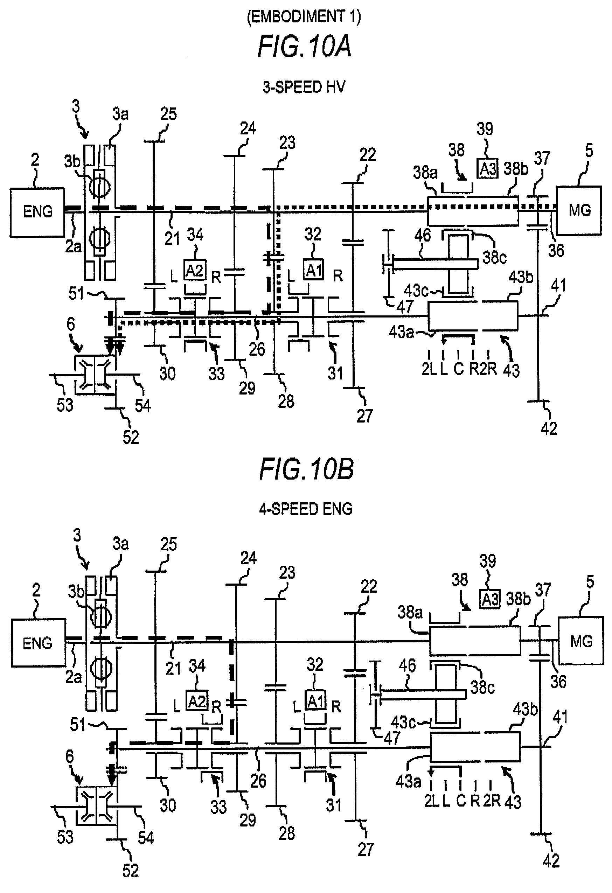

Referring to Figs. 3 and 10A, in a 3-speed HV mode, when a vehicle travels forward, the clutch (CL) 3 is connected (engaged), the first switching mechanism 31 (corresponding to A1) is in the L (left side) position, the second switching mechanism 33 (corresponding to A2) is in the N (neutral) position, and the third switching mechanism 38 and fourth switching mechanism 43 (corresponding to A3) are in the L position (the third switching mechanism 38 is in the linked state and the fourth switching mechanism 43 is in the neutral position). A power transmission path is configured between the engine 2 and the differential system 6 through the crank shaft 2a, the clutch 3, the first shaft 21, the third drive gear 23, the third driven gear 28, the first switching mechanism 31, and the second shaft 26. A power transmission path is configured between the motor generator 5 and the differential system 6 through the third shaft 36, the third switching mechanism 38, the first shaft 21, the third drive gear 23, the third driven gear 28, the first switching mechanism 31, and the second shaft 26. As a result, the engine 2 can drive the vehicle or can cause engine braking, and the motor generator 5 can drive the vehicle, can perform regeneration, or can generate power.

### 4-Speed ENG

Referring to Figs. 3 and 10B, in a 4-speed ENG mode, when a vehicle travels forward, the clutch (CL) 3 is connected (engaged), the first switching mechanism 31 (corresponding to A1) is in the N (neutral) position, the second switching mechanism 33 (corresponding to A2) is in the R (right side) position, and the third switching mechanism 38 and fourth switching mechanism 43 (corresponding to A3) are in the 2L position (the third switching mechanism 38 is in the neutral position and the fourth switching mechanism 43 is in the neutral position). A power transmission path is configured between the engine 2 and the differential system 6 through the crank shaft 2a, the clutch 3, the first shaft 21, the fourth drive gear 24, the fourth driven gear 29, the second switching mechanism 33, and the second shaft 26. A power transmission path is not configured between the engine 2 and the motor generator 5. As a result, the engine 2 can drive the vehicle or can cause engine braking.

### 5-Speed ENG

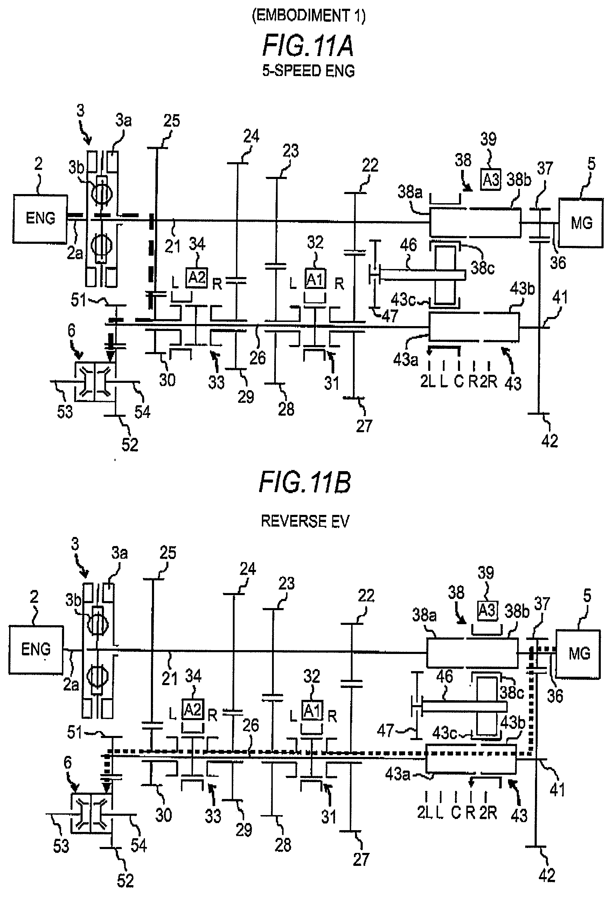

Referring to Figs. 3 and 11A, in a 5-speed ENG mode, when a vehicle travels forward, the clutch (CL) 3 is connected (engaged), the first switching mechanism 31 (corresponding to A1) is in the N (neutral) position, the second switching mechanism 33 (corresponding to A2) is in the L (left side) position, and the third switching mechanism 38 and fourth switching mechanism 43 (corresponding to A3) are in the 2L position (the third switching mechanism 38 is in the neutral position and the fourth switching mechanism 43 is in the neutral position). A power transmission path is configured between the engine 2 and the differential system 6 through the crank shaft 2a, the clutch 3, the first shaft 21, the fifth drive gear 25, the fifth driven gear 30, the second switching mechanism 33, and the second shaft 26. A power transmission path is not configured between the engine 2 and the motor generator 5. As a result, the engine 2 can drive the vehicle or can cause engine braking.

### Reverse EV

Referring to Figs. 3 and 11B, in a reverse EV mode, when a vehicle travels backward, the clutch (CL) 3 is disconnected (disengaged), the first switching mechanism 31 (corresponding to A1) is in the N (neutral) position, the second switching mechanism 33 (corresponding to A2) is in the N (neutral) position, and the third switching mechanism 38 and fourth switching mechanism 43 (corresponding to A3) are in the R position (the third switching mechanism 38 is in the neutral position and the fourth switching mechanism 43 is in the linked state). A power transmission path,is configured between the motor generator 5 and the differential system 6 through the third shaft 36, the first drive gear 37, the first driven gear 42, the fourth shaft 41, the fourth switching mechanism 43, and the second shaft 26. A power transmission path is not configured between the engine 2 and the motor generator 5. As a result, the motor generator 5 can drive the vehicle in a reverse direction (rotate in a direction opposite to that of forward traveling).

### Reverse ENG

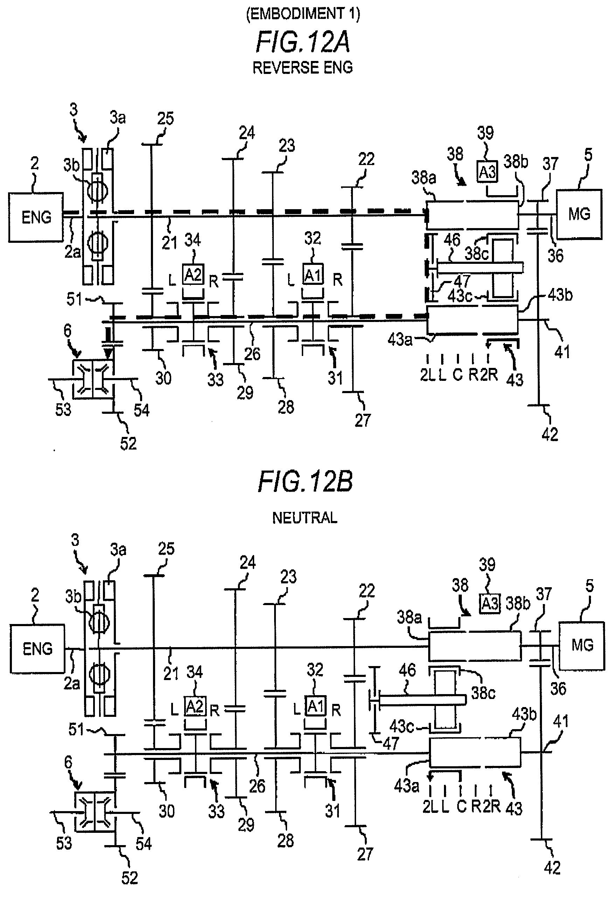

Referring to Figs. 3 and 12A, in a reverse ENG mode, when a vehicle travels backward, the clutch (CL) 3 is connected (engaged), the first switching mechanism 31 (corresponding to A1) is in the N (neutral) position, the second switching mechanism 33 (corresponding to A2) is in the N (neutral) position, and the third switching mechanism 38 and fourth switching mechanism 43 (corresponding to A3) are in the 2R position (the gear 38a of the third switching mechanism 38 and the gear 43a of the fourth switching mechanism 43 are connected through the idler gear 47). A power transmission path is configured between the engine 2 and the differential system 6 through the crank shaft 2a, the clutch 3, the first shaft 21, the gear 38a of the third switching mechanism 38, the idler gear 47, the gear 43a of the fourth switching mechanism 43, and the second shaft 26. As a result, the engine 2 can drive the vehicle.

### Neutral

Referring to Fig. 12B, in a neutral mode, the clutch (CL) 3 is disconnected (disengaged), the first switching mechanism 31 (corresponding to A1) is in the N (neutral) position, the second switching mechanism 33 (corresponding to A2) is in the N (neutral) position, and the third switching mechanism 38 and fourth switching mechanism 43 (corresponding to A3) are in the 2L position (the third switching mechanism 38 and the fourth switching mechanism 43 are in the neutral position). A power transmission path is not configured between the engine 2, the motor generator 5, and the differential system 6.

In Embodiment 1, there are no EV and HV modes for 4-speed and 5-speed. However, by adjusting the positions of the third switching mechanism 38 and fourth switching mechanism 43 (corresponding to A3) and the clutch 3 (CL), EV and HV modes for 4-speed and 5-speed can be set.

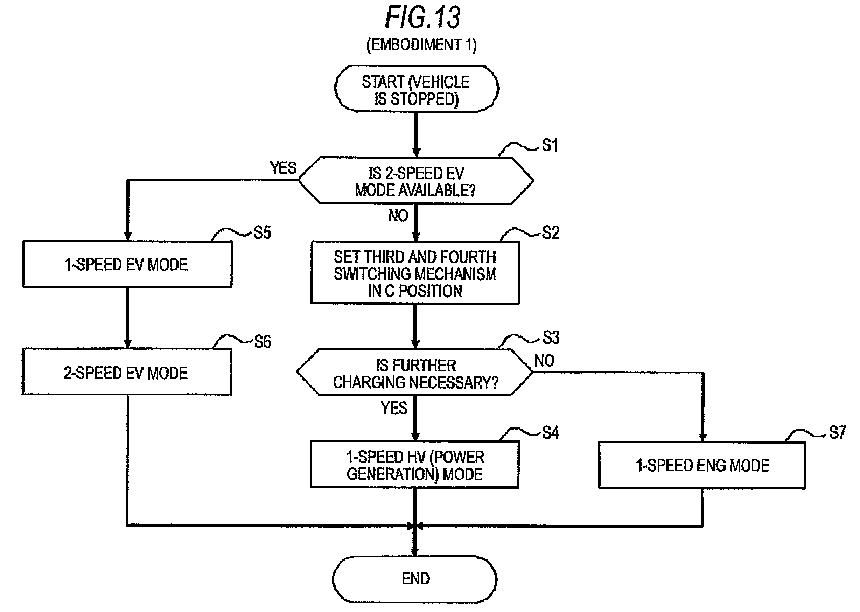

Next, operations when the vehicle drive device according to Embodiment 1 starts traveling will be described with reference to the drawings. Fig. 13 is a flowchart schematically illustrating operations when the vehicle drive device according to Embodiment 1 starts traveling.

When the driver gives an instruction to start traveling during the stop of a vehicle, first, the hybrid controller 16 determines whether the 2-speed EV mode (refer to Figs. 3 and 7B) is available or not, based on predetermined states (for example, a remaining battery level, a battery temperature, an inverter state, a motor generator state, and a vehicle inclination) of a vehicle (step S1). The determination of whether the 2-speed EV mode is available or not can be performed based on, for example, whether or not the remaining battery level is greater than or equal to a preset threshold and whether or not the vehicle inclination is less than or equal to a preset threshold. When the 2-speed EV mode is available (YES in step S1), the process proceeds to step S5.

When the 2-speed EV mode is not available (NO in step S1), the hybrid controller 16 controls the third actuator 39 (A3) of the transmission system 4 through the transmission system controller 13 such that the third switching mechanism 38 and the fourth switching mechanism 43 of the transmission system 4 are in the C position (the third switching mechanism 38 is in the linked state and the fourth switching mechanism 43 is in the linked state) (step S2) . At this time, the clutch 3 (CL) is disconnected (disengaged), the first switching mechanism 31 (corresponding to A1) and the second switching mechanism 33 (corresponding to A2) are in the N (neutral) position.

After step S2, the hybrid controller 16 determines whether the charging of the battery 11 is necessary or not (step S3). The determination of whether the charging of the battery 11 is necessary or not is performed based on whether or not the remaining battery level is less than or equal to a preset threshold (a value lower than the threshold of step S1). When the charging is not necessary (NO in step S3), the process proceeds to step S7.

When the charging is necessary (YES in step S3), the hybrid controller 16 controls the vehicle drive device to be in the 1-speed HV (power generation) mode (refer to Figs. 3 and 7A) (step S4). Then, the process ends. In the 1-speed HV (power generation) mode, the engine 2 drives the vehicle, the motor generator 5 generates power, and the clutch 3 (CL) is connected (engaged).

When the 2-speed EV mode is available (YES in step S1), the hybrid controller 16 controls the vehicle drive device to be in the 1-speed EV mode (refer to Figs. 3 and 6A) (step S5).

After step S5, the hybrid controller 16 controls the vehicle drive device to be in the 2-speed EV mode (refer to Figs. 3 and 7B) (step S6). Then, the process ends.

When the charging is not necessary (NO in step S3), the hybrid controller 16 controls the vehicle drive device to be in the 1-speed ENG mode (refer to Figs. 3 and 6B) (step S7) . Then, the process ends.

According to Embodiment 1, the slide member 46 is provided and thus the third switching mechanism 38, the fourth switching mechanism 43, and the idler gear 47 can be operated by one actuator (the third actuator 39). Therefore, even when a power transmission path of the transmission system 4 between the engine 2 and the motor generator 5 can be blocked by the third switching mechanism 38 and the fourth switching mechanism 43, the cost can be suppressed.

In addition, according to Embodiment 1, the first drive gear 37 and the first driven gear 42, which are used as extra low-speed gears (in Embodiment 1, as the 1-speed gears), are driven by both the motor generator 5 and the engine 2. As a result, it is not necessary that the clutch 3 be half-engaged during extremely low-speed traveling at a slope or in a traffic jam. Therefore, a load applied to the clutch 3 is reduced and the clutch 3 is not burnt out.

In addition, according to Embodiment 1, a power transmission path of the transmission system 4 between the engine 2 and the motor generator 5 can be blocked by the third switching mechanism 38 and the fourth switching mechanism 43. As a result, the wear amount of gears (caused by the co-rotation) in the transmission system 4 can be reduced to a large degree. Accordingly, a portion of the transmission system 4 (a portion of a general manual transmission system) which is closer to the engine 2 side than the side of the third switching mechanism 38 and the fourth switching mechanism 43 can exhibit a transmission efficiency higher than or equal to that of a manual transmission system. In addition, the transmission of power from the motor generator 5 can be realized with high efficiency.

In addition, according to Embodiment 1, a vehicle can travel backward in a state where the battery 11 is not charged, by linking the first shaft 21 and the second shaft 26 to the idler gear 47.

Furthermore, according to Embodiment 1, the third switching mechanism 38 and the fourth switching mechanism 43 are provided. As a result, power transmission patterns of the first shaft 21 and the second shaft 26 can be set among the 5 steps (2L, L, C, R, and 2R) and thus the motor generator 5 can be used at an operating point having high efficiency.

### Embodiment 2

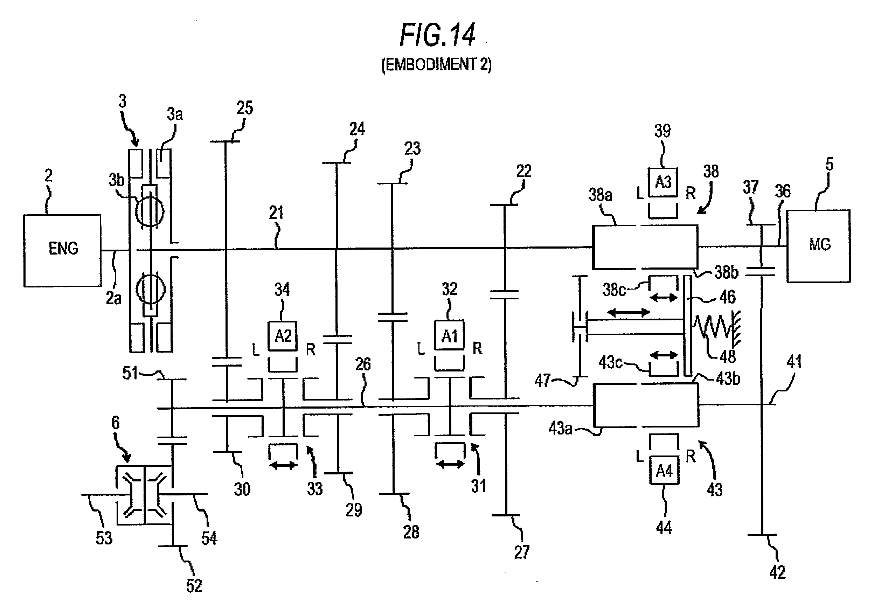

A vehicle drive device according to Embodiment 2 disclosed here will be described with reference to the drawings. Fig. 14 is a diagram schematically illustrating a configuration of a power transmission path of the vehicle drive device according to Embodiment 2.

Embodiment 2 is a modification example of Embodiment 1 and adopts a configuration in which the third switching mechanism 38 and the fourth switching mechanism 43 each can be independently operated by two actuators 39 and 44 and the idler gear 47 can be operated through the slide member 46 according to the operating state of the third switching mechanism 38 and the fourth switching mechanism 43, instead of the configuration in which the third switching mechanism 38, the fourth switching mechanism 43, and the idler gear 47 are operated by one actuator (the third actuator of Fig. 2) using the slide member 46.

The third switching mechanism 38 switches between a linked state and an unlinked state of the first shaft 21 and the third shaft 35 (refer to Fig. 14). The third switching mechanism 38 disconnects the engine 2 and the motor generator 5 from each other. The third switching mechanism 38 includes the gear 38a which rotates along with the first shaft 21, the gear 38b which rotates along with the third shaft 36, and a sleeve 38c which is slidably spline-engaged with the gears 38a and 38b. The sleeve 38c is pressed against a surface of the slide member 46 on the motor generator 5 side so as to be connected thereto and disconnected therefrom. When the sleeve 38c is set in an N (neutral) position, the sleeve 38c is spline-engaged with only the gear 38b. When the sleeve 38c is set in an R (right side) position, the sleeve 38c is spline-engaged with only the gear 38b and the gear 38a meshes with the idler gear 47. When the sleeve 38c is set in an L (left side) position, the sleeve 38c is spline-engaged with the gears 38a and 38b. A switching operation of the third switching mechanism 38 is performed by the third actuator 39.

The third actuator 39 performs a switching operation of the third switching mechanism 38 (refer to Fig. 14). The third actuator 39 causes the third switching mechanism 38 to slide the sleeve 38c which is slidably spline-engaged with the gears 38a and 38b. The third actuator 39 positions the idler gear 47 through the sleeve 38c and the slide member 46. The third actuator 39 is controlled and driven by the transmission system controller (13 of Fig. 1).

The fourth switching mechanism 43 switches between a linked state and an unlinked state of the second shaft 26 and the fourth shaft 41 (refer to Fig. 14). The fourth switching mechanism 43 disconnects the engine 2 and the motor generator 5 from each other. The fourth switching mechanism 43 includes the gear 43a which rotates along with the second shaft 26, the gear 43b which rotates along with the fourth shaft 41, and the sleeve 43c which is slidably spline-engaged with the gears 43a and 43b. The sleeve 43c is pressed against a surface of the slide member 46 on the motor generator 5 side so as to be connected thereto and disconnected therefrom. When the sleeve 43c is set in an N (neutral) position, the sleeve 43c is spline-engaged with only the gear 43b. When the sleeve 43c is set in an R (right side) position, the sleeve 43c is spline-engaged with only the gear 43b and the gear 43a meshes with the idler gear 47. When the sleeve 43c is set in an L (left side) position, the sleeve 43c is spline-engaged with the gears 43a and 43b. A switching operation of the fourth switching mechanism 43 is performed by the fourth actuator 44.

The fourth actuator 44 performs a switching operation of the fourth switching mechanism 43 (refer to Fig. 14). The fourth actuator 44 causes the fourth switching mechanism 43 to slide the sleeve 43c which is slidably spline-engaged with the gears 43a and 43b. The fourth actuator 44 positions the idler gear 47 through the sleeve 43c and the slide member 46. The fourth actuator 44 is controlled and driven by the transmission system controller (13 of Fig. 1).

The slide member 46 changes the position of the idler gear 47 according to the operating state of the third switching mechanism 38 and the fourth switching mechanism 43 (refer to Fig. 14). The slide member 46 is slidably supported in the housing (not illustrated) of the transmission system 4. The slide member 46 is biased toward the engine 2 side by a spring 48 on a surface of the motor generator 5 side. The slide member 46 is pressed against either one or both of a surface of the sleeve 38c of the third switching mechanism 38 on the motor generator 5 side and a surface of the sleeve 43c of the fourth switching mechanism 43 on the motor generator 5 side so as to be connected thereto or disconnected therefrom. The slide member 46 is pressed against one of the sleeve 38c and the sleeve 43c which is located relatively closer to the motor generator 5 side, and is pressed against both the sleeve 38c and the sleeve 43c when both sleeves are located in the same position in a horizontal direction (in a slide direction) . The slide member 46 rotatably holds the idler gear 47 such that the idler gear 47 meshes with the gear 38a of the third switching mechanism 38 and the gear 43a of the fourth switching mechanism 43 when either one or both of the sleeve 38c and the sleeve 43c are set in the R (right side) position.

The idler gear 47 is a gear for transmitting rotational power of the gear 38a of the third switching mechanism 38 to the gear 43a of the fourth switching mechanism 43 (refer to Fig. 14). The idler gear 47 is used when a vehicle travels backward (in a reverse direction) using rotational power of only the engine 2. The idler gear 47 is rotatably held by the slide member 46 so as to mesh with the gear 38a of the third switching mechanism 38 and the gear 43a of the fourth switching mechanism 43 when either one or both of the sleeve 38c and the sleeve 43c are set in the R (right side) position.

The spring 48 is a member which biases the slide member 46 toward the engine 2. An end of the spring 48 is supported by the housing (not illustrated) of the transmission system 4, and the other end thereof biases the slide member 46 toward the engine 2.

The other configurations of Embodiment 2 are the same as those of Embodiment 1.

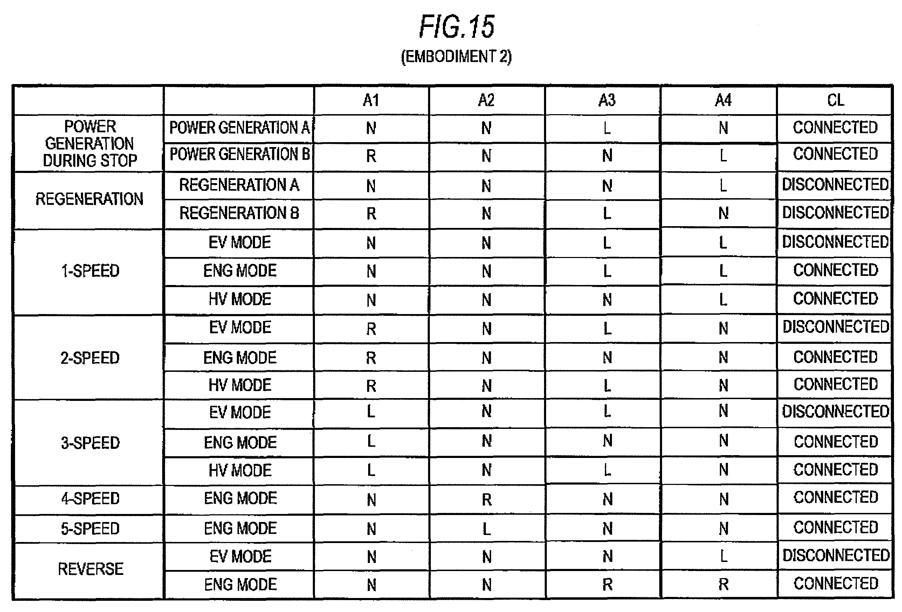

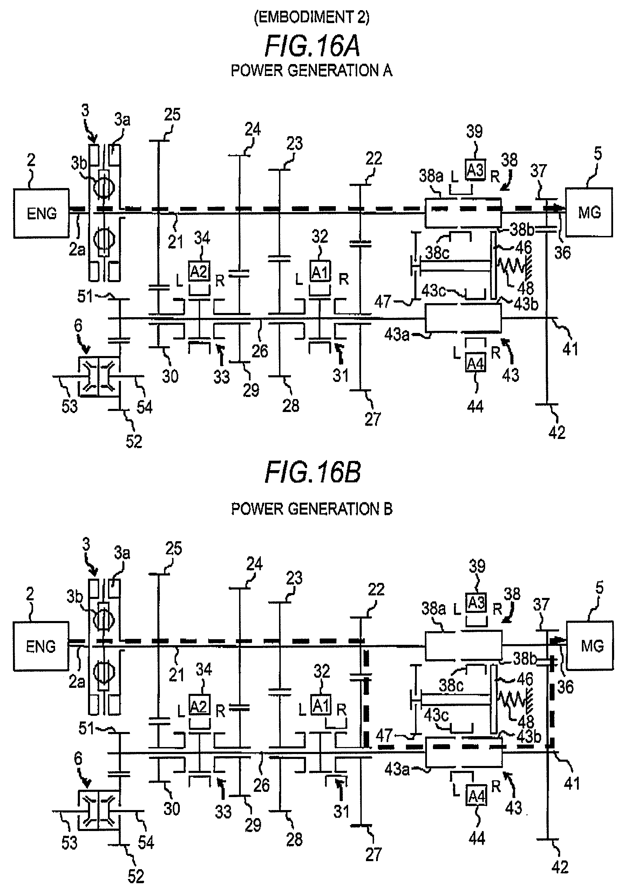

Next, each mode of the vehicle drive device according to Embodiment 2 will be described with reference to the drawings. Fig. 15 is a table schematically illustrating each mode of the vehicle drive device according to Embodiment 2 disclosed here. Figs. 16A to 24B are diagrams schematically illustrating a power transmission path in each mode of the vehicle drive device according to Embodiment 2.

### Power Generation A

Referring to Figs. 15 and 16A, in a power generation A mode, when a vehicle is stopped, the clutch (CL) 3 is connected (enraged), the first switching mechanism 31 (corresponding to A1) is in the N (neutral) position, the second switching mechanism 33 (corresponding to A2) is in the N (neutral) position, the third switching mechanism 38 (corresponding to A3) is in the L (left side) position, and the fourth switching mechanism 43 (corresponding to A4) is in the N (neutral) position. A power transmission path is configured between the engine 2 and the motor generator 5 through the crank shaft 2a, the clutch 3 , the first shaft 21, the third switching mechanism 38, and the third shaft 36. A power transmission path is not configured between the engine 2 and the differential system 6 or between the motor generator 5 and the differential system 6. In this state, when the engine 2 rotates, the motor generator 5 can generate power. In addition, in this state, when the engine 2 is stopped, the motor generator 5 can rotate to start the engine 2.

### Power Generation B

Referring to Figs. 15 and 16B, in a power generation B mode, when a vehicle is stopped, the clutch (CL) 3 is connected (engaged), the first switching mechanism 31 (corresponding to A1) is in the R (right side) position, the second switching mechanism 33 (corresponding to A2) is in the N (neutral) position, the third switching mechanism 38 (corresponding to A3) is in the N (neutral) position, and the fourth switching mechanism 43 (corresponding to A4) is in the L (left side) position. A power transmission path is configured between the engine 2 and the motor generator 5 through the crank shaft 2a, the clutch 3, the first shaft 21, the second drive gear 22, the second driven gear 27, the second shaft 26, the fourth switching mechanism 43, the fourth shaft 41, the first driven gear 42, the first drive gear 37, and the third shaft 36. A power transmission path is not configured between the engine 2 and the differential system 6 or between the motor generator 5 and the differential system 6. In this state, when the engine 2 rotates, the motor generator 5 can generate power. In addition, in this state, when the engine 2 is stopped, the motor generator 5 can rotate to start the engine 2.

### Regeneration A

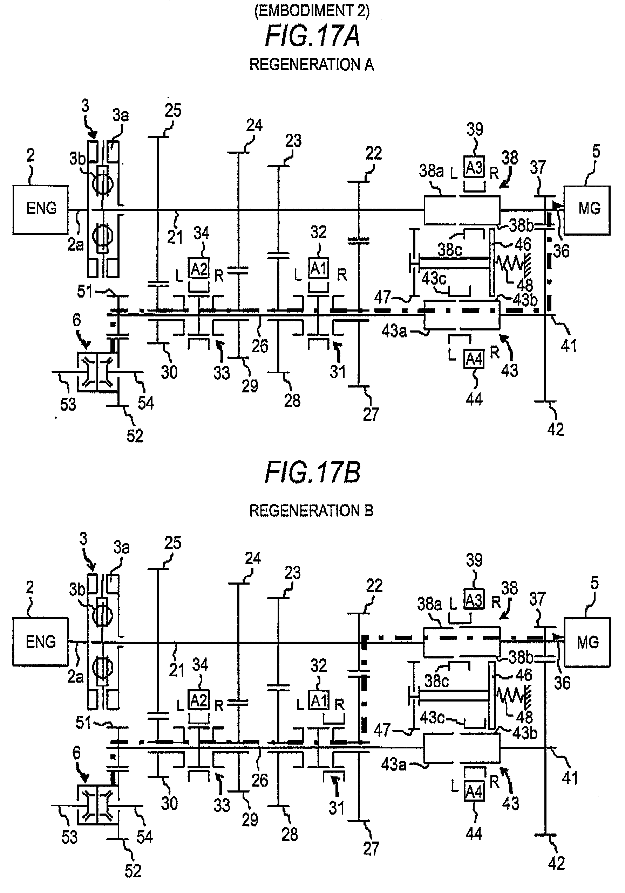

Referring to Figs. 15 and 17A, in a regeneration A mode, when a vehicle decelerates during forward traveling, the clutch (CL) 3 is disconnected (disengaged), the first switching mechanism 31 (corresponding to A1) is in the N (neutral) position, the second switching mechanism 33 (corresponding to A2) is in the N (neutral) position, the third switching mechanism 38 (corresponding to A3) is in the N (neutral) position, and the fourth switching mechanism 43 (corresponding to A4) is in the L (left side) position. A power transmission path is configured between the differential system 6 and the motor generator 5 through the second shaft 26, the fourth switching mechanism 43, the fourth shaft 41, the first driven gear 42, the first drive gear 37, and the third shaft 36. A power transmission path is not configured between the engine 2 and the motor generator 5. As a result, the motor generator 5 can perform regeneration.

### Regeneration B

Referring to Figs. 15 and 17B, in a regeneration B mode, when a vehicle decelerates during forward traveling, the clutch (CL) 3 is disconnected (disengaged), the first switching mechanism 31 (corresponding to A1) is in the R (right side) position, the second switching mechanism 33 (corresponding to A2) is in the N (neutral) position, the third switching mechanism 38 (corresponding to A3) is in the L (left side) position, and the fourth switching mechanism 43 (corresponding to A4) is in the N (neutral) position. A power transmission path is configured between the differential system 6 and the motor generator 5 through the second shaft 26, the first switching mechanism 31, the second driven gear 27, the second drive gear 22, the first shaft 21, the third switching mechanism 38, and the third shaft 36. A power transmission path is not configured between the engine 2 and the motor generator 5. As a result, the motor generator 5 can perform regeneration.

### 1-Speed EV

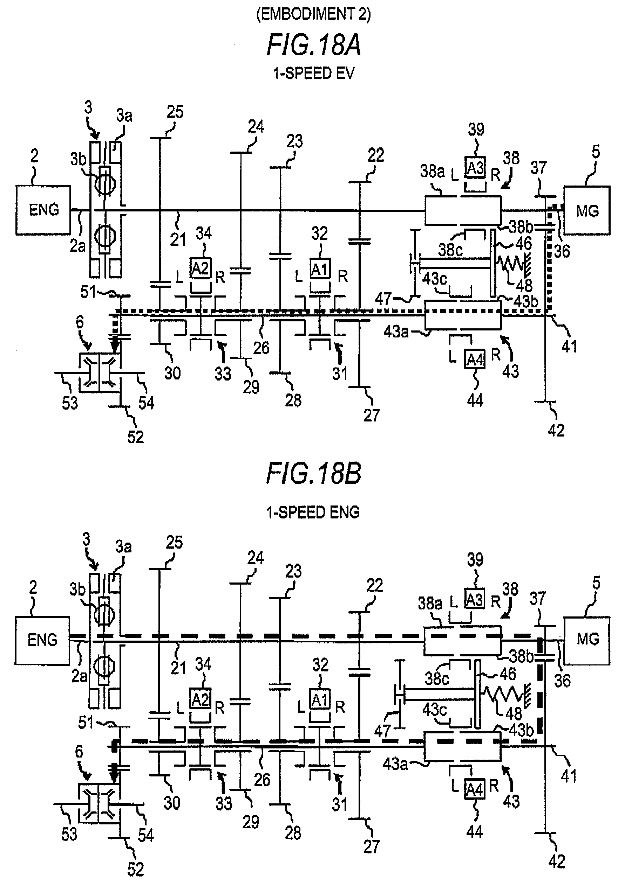

Referring to Figs. 15 and 18A, in a 1-speed EV mode, when a vehicle travels forward, the clutch (CL) 3 is disconnected (disengaged), the first switching mechanism 31 (corresponding to A1) is in the N (neutral) position, the second switching mechanism 33 (corresponding to A2) is in the N (neutral) position, the third switching mechanism 38 (corresponding to A3) is in the N (neutral) position, and the fourth switching mechanism 43 (corresponding to A4) is in the L (left side) position. A power transmission path is configured between the motor generator 5 and the differential system 6 through the third shaft 36, the first drive gear 37, the first driven gear 42, the fourth shaft 41, the fourth switching mechanism 43, and the second shaft 26. A power transmission path is not configured between the engine 2 and the motor generator 5. As a result, the motor generator 5 can drive the vehicle. The EV (Electric Vehicle) mode implies that a vehicle can be driven only by the motor generator 5 for traveling.

### 1-Speed ENG

Referring to Figs . 15 and 18B, in a 1-speed ENG mode, when a vehicle travels forward, the clutch (CL) 3 is connected (engaged), the first switching mechanism 31 (corresponding to A1) is in the N (neutral) position, the second switching mechanism 33 (corresponding to A2) is in the N (neutral) position, the third switching mechanism 38 (corresponding to A3) is in the L (left side) position, and the fourth switching mechanism 43 (corresponding to A4) is in the L (left side) position. A power transmission path is configured between the engine 2 and the differential system 6 through the crank shaft 2a, the clutch 3, the first shaft 21, the third switching mechanism 38, the third shaft 36, the first drive gear 37, the first driven gear 42, the fourth shaft 41, the fourth switching mechanism 43, and the second shaft 26. As a result, the engine 2 can drive the vehicle or can cause engine braking. The ENG (Engine) mode implies that a vehicle can be driven by only the engine 2 for traveling.

### 1-Speed HV

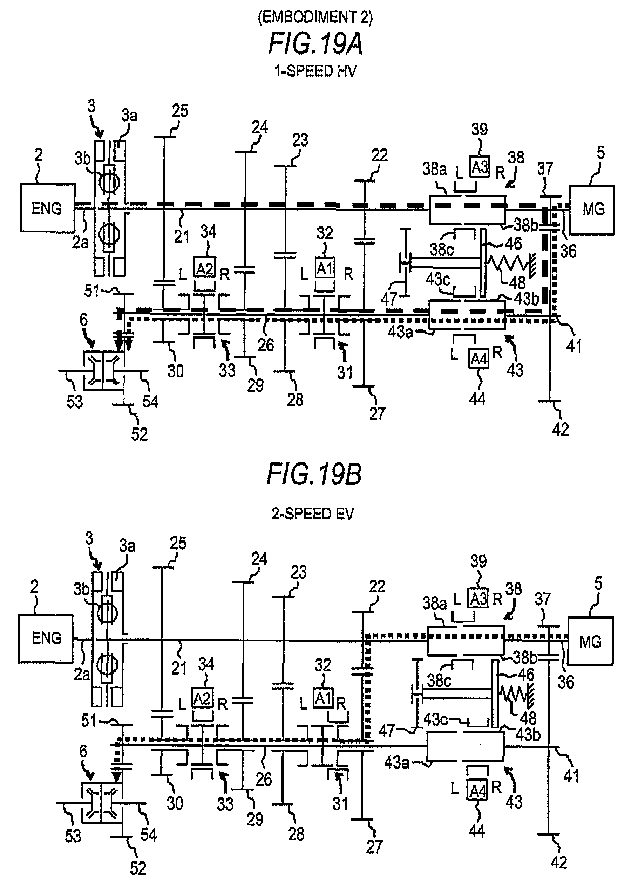

Referring to Figs. 15 and 19A, in a 1-speed HV mode, when a vehicle travels forward, the clutch (CL) 3 is connected (engaged), the first switching mechanism 31 (corresponding to A1) is in the N (neutral) position, the second switching mechanism 33 (corresponding to A2) is in the N (neutral) position, the third switching mechanism 38 (corresponding to A3) is in the L (left side) position, and the fourth switching mechanism 43 (corresponding to A4) is in the L (left side) position. A power transmission path is configured between the engine 2 and the differential system 6 through the crank shaft 2a, the clutch 3, the first shaft 21, the third switching mechanism 38, the third shaft 36, the first drive gear 37, the first driven gear 42, the fourth shaft 41, the fourth switching mechanism 43, and the second shaft 26. A power transmission path is configured between the motor generator 5 and the differential system 6 through the third shaft 36, the first drive gear 37, the first driven gear 42, the fourth shaft 41, the fourth switching mechanism 43, and the second shaft 26. As a result, the engine 2 can drive the vehicle or can cause engine braking, and the motor generator 5 can drive the vehicle, can perform regeneration, or can generate power. The HV (Hybrid Vehicle) mode implies that a vehicle can be driven by both the engine 2 and the motor generator 5 for traveling.

### 2-Speed EV

Referring to Figs. 15 and 19B, in a 2-speed EV mode, when a vehicle travels forward, the clutch (CL) 3 is disconnected (disengaged), the first switching mechanism 31 (corresponding to A1) is in the R (right side) position, the second switching mechanism 33 (corresponding to A2) is in the N (neutral) position, the third switching mechanism 38 (corresponding to A3) is in the L (left side) position, and the fourth switching mechanism 43 (corresponding to A4) is in the N (neutral) position. A power transmission path is configured between the motor generator 5 and the differential system 6 through the third shaft 36, the third switching mechanism 38, the first shaft 21, the second drive gear 22, the second driven gear 27, the first switching mechanism 31, and the second shaft 26. A power transmission path is not configured between the engine 2 and the motor generator 5. As a result, the motor generator 5 can drive the vehicle.

### 2-Speed ENG

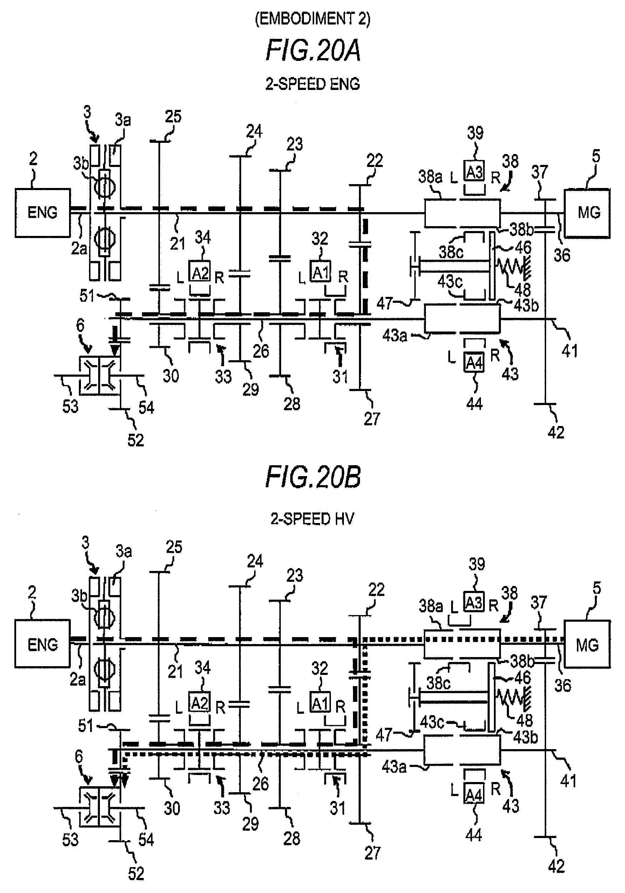

Referring to Figs. 15 and 20A, in a 2-speed ENG mode, when a vehicle travels forward, the clutch (CL) 3 is connected (engaged), the first switching mechanism 31 (corresponding to A1) is in the R (right side) position, the second switching mechanism 33 (corresponding to A2) is in the N (neutral) position, the third switching mechanism 38 (corresponding to A3) is in the N (neutral) position, and the fourth switching mechanism 43 (corresponding to A4) is in the N (neutral) position. A power transmission path is configured between the engine 2 and the differential system 6 through the crank shaft 2a, the clutch 3, the first shaft 21, the second drive gear 22, the second driven gear 27, the first switching mechanism 31, and the second shaft 26. A power transmission path is not configured between the engine 2 and the motor generator 5. As a result, the engine 2 can drive the vehicle or can cause engine braking.

### 2-Speed HV

Referring to Figs. 15 and 20B, in a 2-speed HV mode, when a vehicle travels forward, the clutch (CL) 3 is connected (engaged), the first switching mechanism 31 (corresponding to A1) is in the R (right side) position, the second switching mechanism 33 (corresponding to A2) is in the N (neutral) position, the third switching mechanism 38 (corresponding to A3) is in the L (left side) position, and the fourth switching mechanism 43 (corresponding to A4) is in the N (neutral) position. A power transmission path is configured between the engine 2 and the differential system 6 through the crank shaft 2a, the clutch 3, the first shaft 21, the second drive gear 22, the second driven gear 27, the first switching mechanism 31, and the second shaft 26. A power transmission path is configured between the motor generator 5 and the differential system 6 through the third shaft 36, the third switching mechanism 38, the first shaft 21, the second drive gear 22, the second driven gear 27, the first switching mechanism 31, and the second shaft 26. As a result, the engine 2 can drive the vehicle or can cause engine braking, and the motor generator 5 can drive the vehicle, can perform regeneration, or can generate power.

### 3-Speed EV

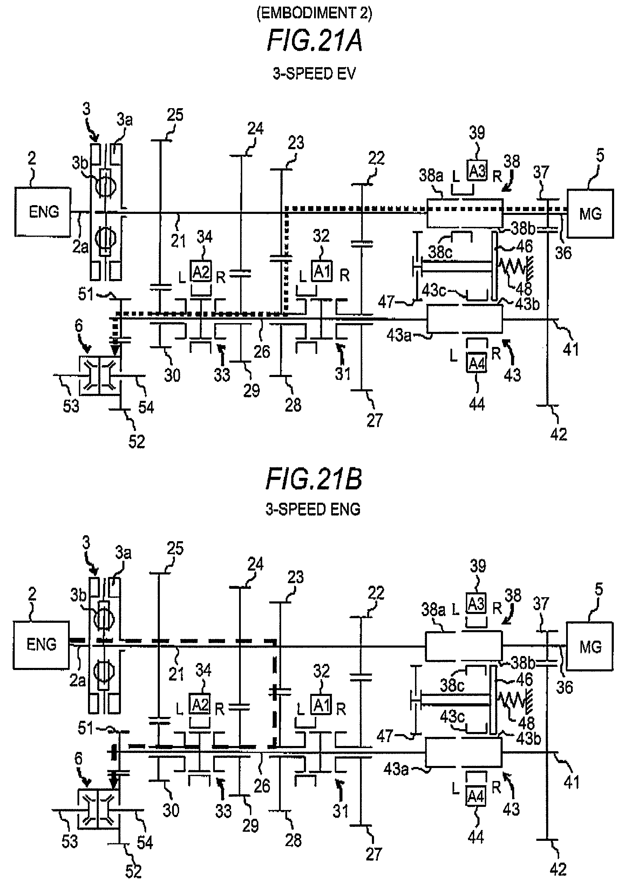

Referring to Figs. 15 and 21A, in a 3-speed EV mode, when a vehicle travels forward, the clutch (CL) 3 is disconnected (disengaged), the first switching mechanism 31 (corresponding to A1) is in the L (left side) position, the second switching mechanism 33 (corresponding to A2) is in the N (neutral) position, the third switching mechanism 38 (corresponding to A3) is in the L (left side) position, and the fourth switching mechanism 43 (corresponding to A4) is in the N (neutral) position. A power transmission path is configured between the motor generator 5 and the differential system 6 through the third shaft 36, the third switching mechanism 38, the first shaft 21, the third drive gear 23, the third driven gear 28, the first switching mechanism 31, and the second shaft 26. A power transmission path is not configured between the engine 2 and the motor generator 5. As a result, the motor generator 5 can drive the vehicle or can perform regeneration.

### 3-Speed ENG

Referring to Figs. 15 and 21B, in a 3-speed ENG mode, when a vehicle travels forward, the clutch (CL) 3 is connected (engaged), the first switching mechanism 31 (corresponding to A1) is in the L (left side) position, the second switching mechanism 33 (corresponding to A2) is in the N (neutral) position, the third switching mechanism 38 (corresponding to A3) is in the N (neutral) position, and the fourth switching mechanism 43 (corresponding to A4) is in the N (neutral) position. A power transmission path is configured between the engine 2 and the differential system 6 through the crank shaft 2a, the clutch 3, the first shaft 21, the third drive gear 23, the third driven gear 28, the first switching mechanism 31, and the second shaft 26. A power transmission path is not configured between the engine 2 and the motor generator 5. As a result, the engine 2 can drive the vehicle or can cause engine braking.

### 3-Speed HV

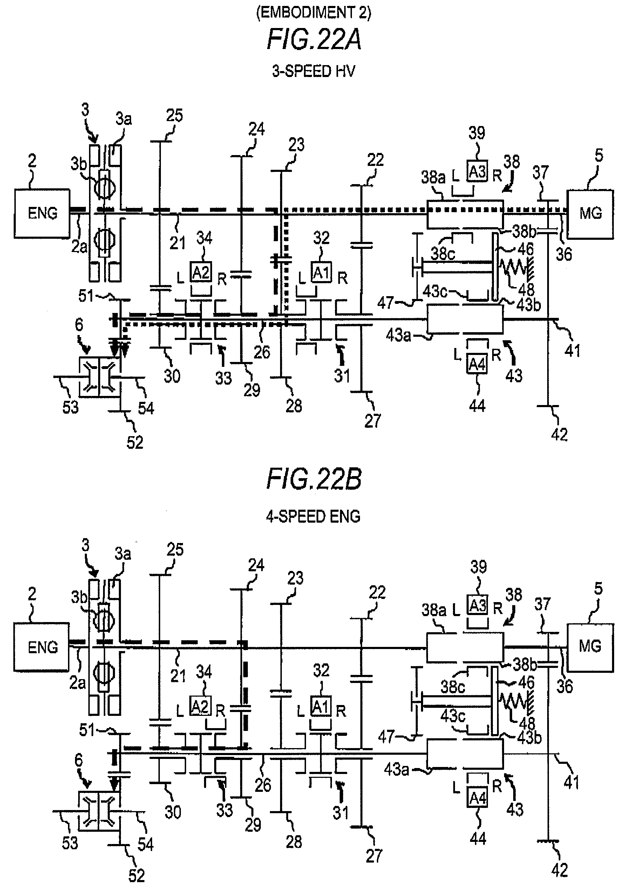

Referring to Figs. 15 and 22A, in a 3-speed HV mode, when a vehicle travels forward, the clutch (CL) 3 is connected (engaged), the first switching mechanism 31 (corresponding to A1) is in the L (left side) position, the second switching mechanism 33 (corresponding to A2) is in the N (neutral) position, the third switching mechanism 38 (corresponding to A3) is in the L (left side) position, and the fourth switching mechanism 43 (corresponding to A4) is in the N (neutral) position. A power transmission path is configured between the engine 2 and the differential system 6 through the crank shaft 2a, the clutch 3, the first shaft 21, the third drive gear 23, the third driven gear 28, the first switching mechanism 31, and the second shaft 26. A power transmission path is configured between the motor generator 5 and the differential system 6 through the third shaft 36, the third switching mechanism 38, the first shaft 21, the third drive gear 23, the third driven gear 28, the first switching mechanism 31, and the second shaft 26. As a result, the engine 2 can drive the vehicle or can cause engine braking, and the motor generator 5 can drive the vehicle, can perform regeneration, or can generate power.

### 4-Speed ENG

Referring to Figs. 15 and 22B, in a 4-speed ENG mode, when a vehicle travels forward, the clutch (CL) 3 is connected (engaged), the first switching mechanism 31 (corresponding to A1) is in the N (neutral) position, the second switching mechanism 33 (corresponding to A2) is in the R (right side) position, the third switching mechanism 38 (corresponding to A3) is in the N (neutral) position, and the fourth switching mechanism 43 (corresponding to A4) is in the N (neutral) position. A power transmission path is configured between the engine 2 and the differential system 6 through the crank shaft 2a, the clutch 3, the first shaft 21, the fourth drive gear 24, the fourth driven gear 29, the second switching mechanism 33, and the second shaft 26. A power transmission path is not configured between the engine 2 and the motor generator 5. As a result, the engine 2 can drive the vehicle or can cause engine braking.

### 5-Speed ENG

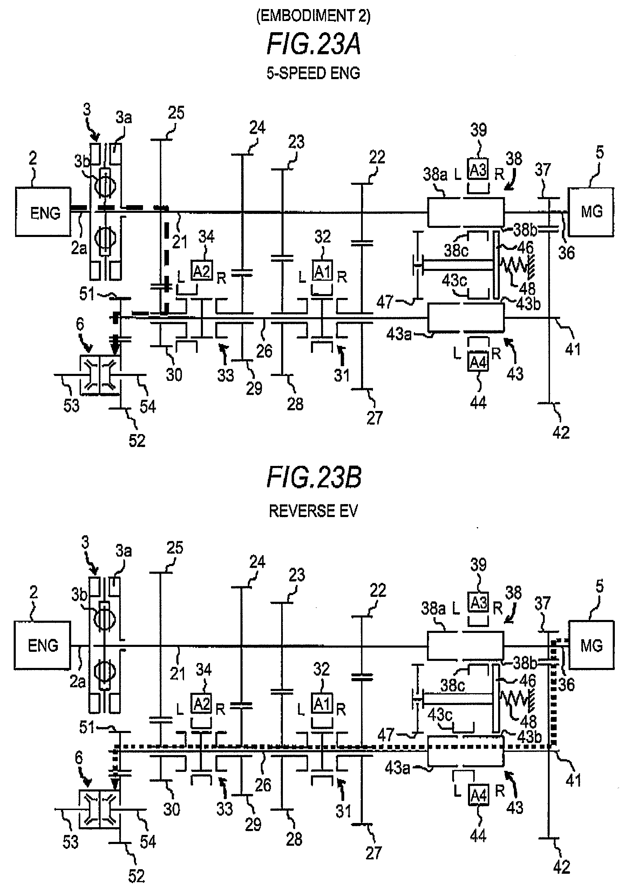

Referring to Figs. 15 and 23A, in a 5-speed ENG mode, when a vehicle travels forward, the clutch (CL) 3 is connected (engaged), the first switching mechanism 31 (corresponding to A1) is in the N (neutral) position, the second switching mechanism 33 (corresponding to A2) is in the L (left side) position, the third switching mechanism 38 (corresponding to A3) is in the N (neutral) position, and the fourth switching mechanism 43 (corresponding to A4) is in the N (neutral) position. A power transmission path is configured between the engine 2 and the differential system 6 through the crank shaft 2a, the clutch 3, the first shaft 21, the fifth drive gear 25, the fifth driven gear 30, the second switching mechanism 33, and the second shaft 26. A power transmission path is not configured between the engine 2 and the motor generator 5. As a result, the engine 2 can drive the vehicle or can cause engine braking.

### Reverse EV

Referring to Figs. 15 and 23B, in a reverse EV mode, when a vehicle travels backward, the clutch (CL) 3 is disconnected (disengaged), the first switching mechanism 31 (corresponding to A1) is in the N (neutral) position, the second switching mechanism 33 (corresponding to A2) is in the N (neutral) position, the third switching mechanism 38 (corresponding to A3) is in the N (neutral) position, and the fourth switching mechanism 43 (corresponding to A4) is in the L (left side) position. A power transmission path is configured between the motor generator 5 and the differential system 6 through the third shaft 36, the first drive gear 37, the first driven gear 42, the fourth shaft 41, the fourth switching mechanism 43, and the second shaft 26. A power transmission path is not configured between the engine 2 and the motor generator 5. As a result, the motor generator 5 can drive the vehicle in a reverse direction (rotate in a direction opposite to that of forward traveling).

### Reverse ENG

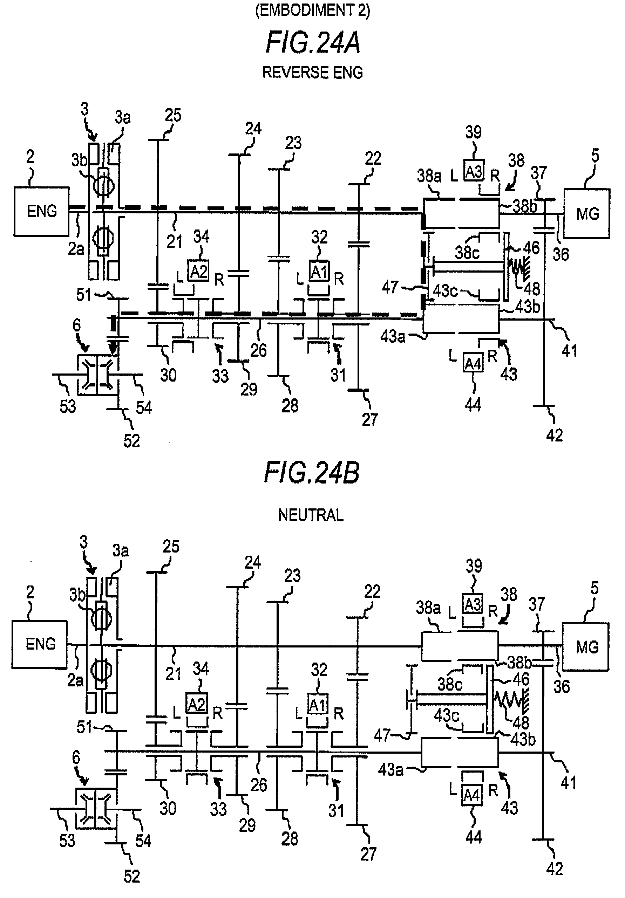

Referring to Figs. 15 and 24A, in a reverse ENG mode, when a vehicle travels backward, the clutch (CL) 3 is connected (engaged), the first switching mechanism 31 (corresponding to A1) is in the N (neutral) position, the second switching mechanism 33 (corresponding to A2) is in the N (neutral) position, the third switching mechanism 38 (corresponding to A3) is in the R (right side) position, and the fourth switching mechanism 43 (corresponding to A4) is in the R (right side) position. A power transmission path is configured between the engine 2 and the differential system 6 through the crank shaft 2a, the clutch 3, the first shaft 21, the gear 38a of the third switching mechanism 38, the idler gear 47, the gear 43a of the fourth switching mechanism 43, and the second shaft 26. As a result, the engine 2 can drive the vehicle.

### Neutral

Referring to Fig. 24B, in a neutral mode, the clutch (CL) 3 is disconnected (disengaged), the first switching mechanism 31 (corresponding to A1) is in the N (neutral) position, the second switching mechanism 33 (corresponding to A2) is in the N (neutral) position, the third switching mechanism 38 (corresponding to A3) is in the N (neutral) position, and the fourth switching mechanism 43 (corresponding to A4) is in the N (neutral) position. A power transmission path is not configured between the engine 2, the motor generator 5, and the differential system 6.

In Embodiment 2, there are no EV and HV modes for 4-speed and 5-speed. However, by adjusting the positions of the third switching mechanism 38 (corresponding to A3) and the fourth switching mechanism 43 (corresponding to A4) and the clutch 3 (CL), EV and HV modes for 4-speed and 5-speed can be set.

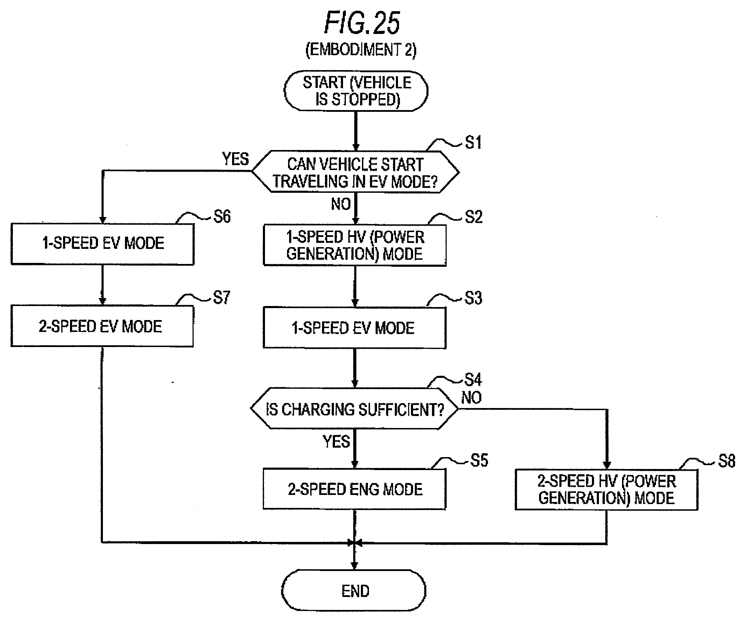

Next, operations when the vehicle drive device according to Embodiment 2 starts traveling will be described with reference to the drawings. Fig. 25 is a flowchart schematically illustrating operations when the vehicle drive device according to Embodiment 2 starts traveling.

When the driver gives an instruction to start traveling during the stop of a vehicle, first, the hybrid controller (16 of Fig. 1) determines whether or not the vehicle can start traveling in the EV mode (refer to Figs. 15 and 18A), based on predetermined states (for example, a remaining battery level, a battery temperature, an inverter state, a motor generator state, and a vehicle inclination) of a vehicle (step S1). The determination of whether or not the vehicle can start traveling in the EV mode can be performed based on, for example, whether or not the remaining battery level is greater than or equal to a preset threshold. When the vehicle can start traveling in the EV mode (YES in step S1), the process proceeds to step S6.

When the vehicle cannot start traveling in the EV mode (NO in step S1), the hybrid controller 16 controls the vehicle drive device to be in the 1-speed HV (power generation) mode (refer to Figs. 15 and 19A) (step 52). In the 1-speed HV (power generation) mode, the engine 2 drives the vehicle, the motor generator 5 generates power, and the clutch 3 (CL) is connected (engaged).

After step S2, the hybrid controller 16 controls the vehicle drive device to be in the 1-speed EV mode (refer to Figs. 15 and 18A) (step S3).

After step S3, the hybrid controller 16 determines whether the charging (remaining battery level) of the battery (11 of Fig. 1) is sufficient or not (step S4). The determination of whether the charging is sufficient or not is performed based on whether or not the remaining battery level is greater than or equal to a preset threshold. When the charging is not sufficient (NO in step S4), the process proceeds to step S8.

When the charging is sufficient (YES in step S4), the hybrid controller 16 controls the vehicle drive device to be in the 2-speed ENG mode (refer to Figs. 15 and 20A) (step S5). Then, the process ends.

When the vehicle can start traveling in the EV mode (YES in step S1), the hybrid controller 16 controls the vehicle drive device to be in the 1-speed EV mode (refer to Figs. 15 and 18A) (step S6).

After step S6, the hybrid controller 16 controls the vehicle drive device to be in the 2-speed EV mode (refer to Figs. 15 and 19B) (step S7). Then, the process ends.

When the charging is not sufficient (NO in step S4), the hybrid controller 16 controls the vehicle drive device to be in the 2-speed HV (power generation) mode (refer to Figs. 15 and 20B) (step S8). Then, the process ends. In the 2-speed HV (power generation) mode, the engine 2 drives the vehicle, the motor generator 5 generates power, and the clutch 3 (CL) is connected (engaged).

According to Embodiment 2, the slide member 46 is provided and thus the third switching mechanism 38, the fourth switching mechanism 43, and the idler gear 47 can be operated by two actuators (the third actuator 39 and the fourth actuator 44). Therefore, even when a power transmission path of the transmission system 4 between the engine 2 and the motor generator 5 can be blocked by the third switching mechanism 38 and the fourth switching mechanism 43, the cost can be suppressed. In Embodiment 2, the number of actuators is more than that of Embodiment 1 by one. However, as compared to the related art, the cost can be suppressed because a dedicated actuator for moving the idler gear 47 is not necessary.

In addition, according to Embodiment 2, the third switching mechanism 38 and the fourth switching mechanism 43 are each independently operated by two actuators (the third actuator 39 and the fourth actuator 44). As a result, the motor generator 5 with high response can assist to realize high drivability (with less feeling of idle running) and a more complex operation than that of Embodiment 1 can be performed.

In addition, according to Embodiment 2, a power transmission path of the transmission system 4 between the engine 2 and the motor generator 5 can be blocked by the third switching mechanism 38 and the fourth switching mechanism 43. As a result, the wear amount of gears (caused by the co-rotation) in the transmission system 4 can be reduced to a large degree. Accordingly, a portion of the transmission system 4 (a portion of a general manual transmission system) which is closer to the engine 2 side than the side of the third switching mechanism 38 and the fourth switching mechanism 43 can exhibit a transmission efficiency higher than or equal to that of a manual transmission system. In addition, the transmission of power from the motor generator 5 can be realized with high efficiency.

In addition, according to Embodiment 2, the first drive gear 37 and the first driven gear 42, which are used as extra low-speed gears (in Embodiment 1, as the 1-speed gears), are driven by both the motor generator 5 and the engine 2. As a result, it is not necessary that the clutch 3 be half-engaged during extremely low-speed traveling at a slope or in a traffic jam. Therefore, a load applied to the clutch 3 is reduced and the clutch 3 is not burnt out.

In addition, according to Embodiment 2, a vehicle can travel backward in a state where the battery 11 is not charged, by linking the first shaft 21 and the second shaft 26 to the idler gear 47.

Furthermore, according to Embodiment 2, the third switching mechanism 38 and the fourth switching mechanism 43 are provided. As a result, plural power transmission patterns of the first shaft 21 and the second shaft 26 can be set and thus the motor generator 5 can be used at an operating point having high efficiency.

### Embodiment 3

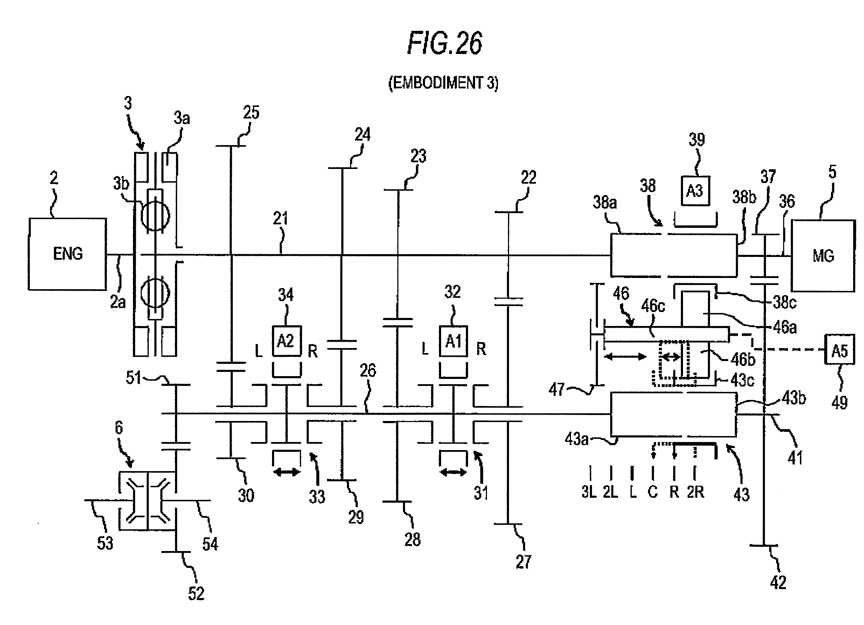

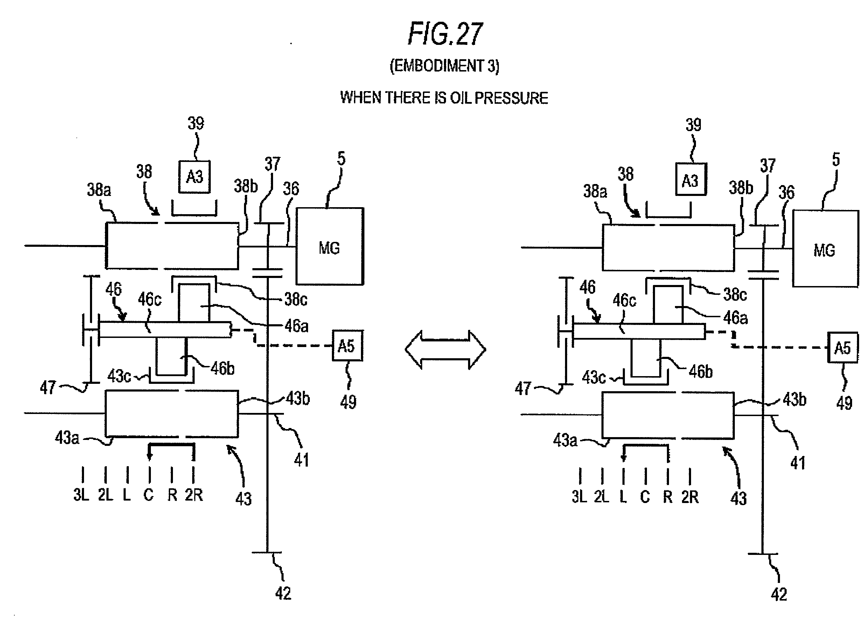

A vehicle drive device according to Embodiment 3 disclosed here will be described with reference to the drawings. Fig. 26 is a diagram schematically illustrating a configuration of a power transmission path of a vehicle drive device according to Embodiment 3. Fig. 27 is a diagram schematically illustrating main components regarding operations of a third switching mechanism and a fourth switching mechanism when a slide member does not receive an oil pressure from a fifth actuator in the vehicle drive device according to Embodiment 3.

Embodiment 3 is a modification example of Embodiment 1. In Embodiment 1, when the state where the third switching mechanism 38 is in the neutral state and the fourth switching mechanism 43 is in the linked state (the R position of Fig. 2) is switched to the state where the third switching mechanism 38 is in the linked state and the fourth switching mechanism 43 is in the neutral state (the L position of Fig. 2), there is the intermediate state where both the third switching mechanism 38 and the fourth switching mechanism 43 are in the linked state (C position of Fig. 2). In Embodiment 3, a shift function is provided in which the third switching mechanism 38 and the fourth switching mechanism 43 can be shifted to the neutral state without the intermediate state where both the third switching mechanism 38 and the fourth switching mechanism 43 are in the linked state, when the state where the third switching mechanism 38 is in the neutral state and the fourth switching mechanism 43 is in the linked state (the left side of Fig. 27) is switched to the state where the third switching mechanism 38 is in the linked state and the fourth switching mechanism 43 is in the neutral state (the right side of Fig. 27). In the shift function, a second protrusion 46b of the slide member 46 can slide (can slide between portions indicated by a solid line and a dashed line of the second protrusion 46b in Fig. 26) relative to a main body 46c according to the oil pressure controlled by a fifth actuator 49.

The slide member 46 makes the third switching mechanism 38, the fourth switching mechanism 43, and the idler gear 47 operate in conjunction with each other (refer to Fig. 26). The slide member 46 slides the sleeve 38c of the third switching mechanism 38 and the sleeve 43c of the fourth switching mechanism 43 at the same time. The slide member 46 includes a first protrusion 46a, the second protrusion 46b, and the main body 46c. The first protrusion 46a is engaged with the sleeve 38c of the third switching mechanism 38 and is fixed to the main body 46c. The second protrusion 46b is engaged with the sleeve 43c of the fourth switching mechanism 43 and is held by the main body 46c so as to slide by a predetermined width. The main body 46c fixes the first protrusion 46a and holds the second protrusion 46b such that the second protrusion 46b can slide by a predetermined width. The main body 46c is slidably supported in the housing (not illustrated) of the transmission system 4. The main body 46c is connected to the fifth actuator 49 through an oil passage. When the oil pressure controlled by the fifth actuator 49 is not received (when there is no oil pressure), the main body 46c shifts the second protrusion 46b toward the motor generator 5 (to the position of the portion indicated by the solid line of the second protrusion 46b in Fig. 26). When the oil pressure controlled by the fifth actuator 49 is received (when there is an oil pressure), the main body 46c shifts the second protrusion 46b toward the engine 2 (to the position of the portion indicated by the dashed line of the second protrusion 46b in Fig. 26). The main body 46c rotatably holds the idler gear 47 such that the idler gear 47 meshes with the gear 38a of the third switching mechanism 38 and the gear 43a of the fourth switching mechanism 43 when there is no oil pressure and the sleeve 43c is in the 2R position.

The fifth actuator 49 slides the second protrusion 46b of the slide member 46 relative to the main body 46c (refer to Fig. 26). The fifth actuator 49 is connected to the main body 46c of the slide member 46 through the oil passage (the expandable or flexible oil passage). When the main body 46c does not receive an oil pressure (when there is no oil pressure), the fifth actuator 49 shifts the second protrusion 46b toward the motor generator 5 (to the position of the portion indicated by the solid line of the second protrusion 46b in Fig. 26). When the main body 46c receives an oil pressure (when there is oil pressure), the fifth actuator 49 shifts the second protrusion 46b toward the engine 2 (to the position of the portion indicated by the dashed line of the second protrusion 46b in Fig. 26)

The other configurations of Embodiment 3 are the same as those of Embodiment 1.

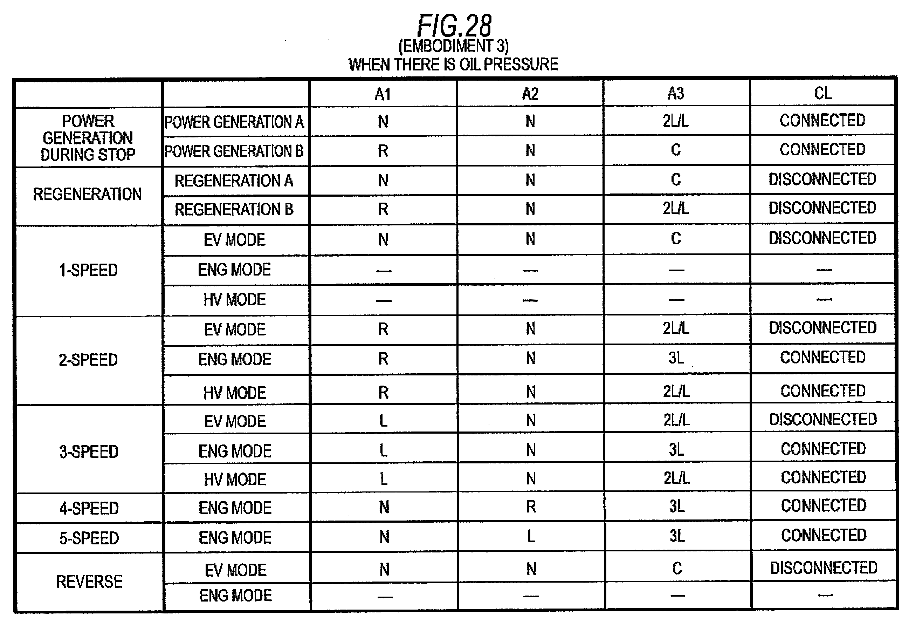

Next, each mode of the vehicle drive device according to Embodiment 3 will be described with reference to the drawings. Fig. 28 is a table schematically illustrating each mode when the slide member receives an oil pressure from the fifth actuator in the vehicle drive device according to Embodiment 3.

Operations when the slide member 46 does not receive an oil pressure from the fifth actuator 49 are the same as those of Embodiment 1.

When the slide member 46 receives an oil pressure from the fifth actuator 49, there is no state where both the third switching mechanism 38 and the fourth switching mechanism 43 are in the linked state. Therefore, the 1-speed ENG mode and the 1-speed HV mode, which require the state where both the third switching mechanism 38 and the fourth switching mechanism 43 are in the linked state, cannot be set. The slide member 46 usually receives an oil pressure when the remaining battery level of the battery (11 of Fig. 1) is not sufficient. Therefore, the third switching mechanism 38 and fourth switching mechanism 43 (corresponding to A3) should not be set in the R position and the 2R position such that the reverse ENG mode is not set. Operations of portions (A1, A2, and CL) other than the third actuator 39 (A3) when there is oil pressure are the same as those of embodiment 1, but the third actuator 39 (A3) is shifted to the left side position by one step. When the third switching mechanism 38 and fourth switching mechanism 43 (corresponding to A3) are in the L position and the 2L position, the third switching mechanism 38 is in the linked state and the fourth switching mechanism 43 is in the neutral state. Accordingly, in modes (for example, the power generation A mode) which require the state where the third switching mechanism 38 is in the linked state and the fourth switching mechanism 43 is in the neutral state, both of the L position and the 2L position can be used.

According to Embodiment 3, the same effects as that of Embodiment 1 are exhibited and furthermore the third switching mechanism 38 and the fourth switching mechanism 43 can be shifted to the neutral state without the intermediate state where both the third switching mechanism 38 and the fourth switching mechanism 43 are in the linked state, when the state where the third switching mechanism 38 is in the neutral state and the fourth switching mechanism 43 is in the linked state (the left side of Fig. 27; the 1-speed EV mode) is switched to the state where the third switching mechanism 38 is in the linked state and the fourth switching mechanism 43 is in the neutral state (the right side of Fig. 27; the 2-speed EV mode). As a result, for example, when the gear is shifted between the 1-speed EV mode and the 2-speed EV mode, gear shift shock can be avoided and drivability can be improved. In Embodiment 3, the number of actuators is more than that of Embodiment 1 by one. However, as compared to the related art, the cost can be suppressed because a dedicated actuator for moving the idler gear 47 is not necessary.

The embodiments or examples can be modified and adjusted based on the basic technical concept thereof within the range of the full disclosure disclosed herein (including the claims and the drawings). In addition, a variety of the elements disclosed herein (including the respective elements of the claims, the respective elements of the embodiments or examples, and the respective elements of the drawings) can be combined and selected in various ways within the range of the claims disclosed herein. That is, it should be noted that this disclosure includes the full disclosure including the claims and the drawings and various modifications and alternations thereof which could have been conceived by those skilled in the art based on the basic technical concept.

A vehicle drive device includes: an input-shaft-side switching mechanism that switches between a linked state and an unlinked state to a first input shaft and a second input shaft; an output-shaft-side switching mechanism that switches between a linked state and an unlinked state to a first output shaft and a second output shaft; a slide member that slides in response to a switching operation of the input-shaft-side switching mechanism and the output-shaft-side switching mechanism; and an idler gear that is rotatably held at the slide member, receives rotational power of the first input shaft through the input-shaft-side switching mechanism according to a slide position of the slide member, and transmits rotational power to the second output shaft through the output-shaft-side switching mechanism.

## Claims

1. A vehicle drive device comprising:
a first gear train (22-25, 27-30, 33) that changes a rotation speed of a first input shaft (21), to which rotational power of an internal combustion engine (2) is input through a clutch (3), so as to transmit power to a first output shaft (26) and to switch between a plurality of gear ratios;
a second gear train (37,42) that changes a rotation speed of a second input shaft (36), to which rotational power of an electric motor (5) is input, so as to transmit power to a second output shaft (41) and has a higher gear ratio than that of the first gear train;
an input-shaft-side switching mechanism (43) that switches between a linked state and an unlinked state to the first input shaft and the second input shaft;
an output-shaft-side switching mechanism that switches between a linked state and an unlinked state to the first output shaft and the second output shaft;
a slide member (46) that slides in response to a switching operation of the input-shaft-side switching mechanism and the output-shaft-side switching mechanism; and
an idler gear (47) that is rotatably held at the slide member (46), receives rotational power of the first input shaft through the input-shaft-side switching mechanism according to a slide position of the slide member, and transmits rotational power to the second output shaft through the output-shaft-side switching mechanism.

2. The vehicle drive device according to claim 1,
wherein the second gear train includes
a first drive gear that rotates along with the second input shaft, and
a first driven gear that rotates along with the second output shaft and meshes with the first drive gear.

3. The vehicle drive device according to claim 2,
wherein the first gear train includes
a second drive gear that rotates along with the first input shaft and has a larger diameter than that of the first drive gear,
a third drive gear that rotates along with the first input shaft and has a larger diameter than that of the second drive gear,
a second driven gear that is arranged so as to run idle with respect to the first output shaft and meshes with the second drive gear,
a third driven gear that is arranged so as to run idle with respect to the first output shaft and meshes with the third drive gear,
a first switching mechanism that selects one of the second driven gear and the third driven gear and switches between a linked state and an unlinked state thereof to the first output shaft,
a fourth drive gear that rotates along with the first input shaft and has a larger diameter than that of the third drive gear,
a fifth drive gear that rotates along with the first input shaft and has a larger diameter than that of the fourth drive gear,
a fourth driven gear that is arranged so as to run idle with respect to the first output shaft and meshes with the fourth drive gear,
a fifth driven gear that is arranged so as to run idle with respect to the first output shaft and meshes with the fifth drive gear, and
a second switching mechanism that selects one of the fourth driven gear and the fifth driven gear and switches between a linked state and an unlinked state thereof to the first output shaft.

4. The vehicle drive device according to any one of claims 1 to 3, further comprising:
a first actuator that performs a switching operation of the input-shaft-side switching mechanism, the output-shaft-side switching mechanism, or the slide member,
wherein the input-shaft-side switching mechanism performs a switching operation in conjunction with a switching operation of the output-shaft-side switching mechanism through the slide member, and
wherein the first actuator performs a switching operation at one of:
a first position in which the idler gear is connected to the input-shaft-side switching mechanism and the output-shaft-side switching mechanism, the input-shaft-side switching mechanism is in the unlinked state, and the output-shaft-side switching mechanism is in the unlinked state;
a second position in which the idler gear is not connected to the input-shaft-side switching mechanism and the output-shaft-side switching mechanism, the input-shaft-side switching mechanism is in the unlinked state, and the output-shaft-side switching mechanism is in the linked state;
a third position in which the idler gear is not connected to the input-shaft-side switching mechanism and the output-shaft-side switching mechanism, the input-shaft-side switching mechanism is in the linked state, and the output-shaft-side switching mechanism is in the linked state;
a fourth position in which the idler gear is not connected to the input-shaft-side switching mechanism and the output-shaft-side switching mechanism, the input-shaft-side switching mechanism is in the linked state, and the output-shaft-side switching mechanism is in the unlinked state; and
a fifth position in which the idler gear is not connected to the input-shaft-side switching mechanism and the output-shaft-side switching mechanism, the input-shaft-side switching mechanism is in the unlinked state, and the output-shaft-side switching mechanism is in the unlinked state.

5. The vehicle drive device according to claim 4, further comprising:
a second actuator that is connected through the slide member and an oil passage,
wherein the slide member has a function of receiving an oil pressure, controlled by the second actuator, to shift a switching position relative to the input-shaft-side switching mechanism and the output-shaft-side switching mechanism,
wherein when the slide member receives the oil pressure controlled by the second actuator, the first actuator performs a switching operation at one of:
another first position in which the idler gear is not connected to the input-shaft-side switching mechanism and the output-shaft-side switching mechanism, the input-shaft-side switching mechanism is in the unlinked state, and the output-shaft-side switching mechanism is in the linked state;
another second position in which the idler gear is not connected to the input-shaft-side switching mechanism and the output-shaft-side switching mechanism, the input-shaft-side switching mechanism is in the linked state, and the output-shaft-side switching mechanism is in the unlinked state; and
another third position in which the idler gear is not connected to the input-shaft-side switching mechanism and the output-shaft-aide switching mechanism, the input-shaft-side switching mechanism is in the unlinked state, and the output-shaft-side switching mechanism is in the unlinked state, and
wherein during a movement from the another first position to the another second position, the input-shaft-side switching mechanism is in the unlinked state and the output-shaft-side switching mechanism is in the unlinked state.

6. The vehicle drive device according to claim 5, wherein when the slide member does not receive the oil pressure, controlled by the second actuator, the first actuator performs a switching operation at one of the first position to the fifth position.

7. The vehicle drive device according to any one of claims 1 to 3, further comprising:
an input shaft actuator that performs a switching operation of the input-shaft-side switching mechanism; and
an output shaft actuator that performs a switching operation of the output-shaft-side switching mechanism,
wherein the slide member performs a slide operation at one of:
a first position in which the idler gear is connected to the input-shaft-side switching mechanism and the output-shaft-side switching mechanism and both of the input-shaft-side switching mechanism and the output-shaft-side switching mechanism are in the unlinked state;
a second position in which the idler gear is not connected to the input--shaft-side switching mechanism and the output-shaft-side switching mechanism and either one or both of the input-shaft-side switching mechanism and the output-shaft-side switching mechanism are in the unlinked state; and
a third position in which the idler gear is not connected to the input-shaft-side switching mechanism and the output-shaft-side switching mechanism and both of the input-shaft-side switching mechanism and the output-shaft-side switching mechanism are in the linked state.

## Patentansprüche

1. Fahrzeugantriebsvorrichtung mit:
einem ersten Getriebezug (22-25, 27-30, 33), der eine Rotationsgeschwindigkeit einer ersten Eingangswelle (21), der Rotationskraft einer Brennkraftmaschine (2) durch eine Kupplung zugegeben wird, ändert, um Kraft zu einer ersten Ausgangswelle (26) zu übertragen, und um zwischen einer Vielzahl von Getriebeübersetzungsverhältnissen umzuschalten;
einem zweiten Getriebezug (37, 42), der eine Rotationsgeschwindigkeit einer zweiten Eingangswelle (36), der Rotationskraft eines Elektromotors (5) zugegeben wird, ändert, um Kraft zu einer zweiten Ausgangswelle (41) zu übertragen, und das ein höheres Getriebeübersetzungsverhältnis als das erste Zahnradgetriebe hat;
einem eingangswellenseitigen Wechselmechanismus (43), der zwischen einem verbundenen Zustand und einem unverbundenen Zustand zu der ersten und zweiten Eingangswelle wechselt;
einen ausgangswellenseitigen Wechselmechanismus (46), der zwischen einem verbundenen Zustand und einem unverbundenen Zustand zu der ersten und zweiten Ausgangswelle wechselt;
einem Gleitelement (46), das in Reaktion zu einem Wechselbetrieb des eingangswellenseitigen Wechselmechanismus und des ausgangswellenseitigen Wechselmechanismus gleitet; und
ein Mitlaufzahnrad (47), das rotierbar an dem Gleitelement (46) gehalten ist, Rotationskraft von der ersten Eingangswelle durch den eingangswellenseitigen Wechselmechanismus gemäß einer Gleitposition des Gleitelementes enthält und Rotationskraft zur zweiten Ausgangswelle durch den ausgangswellenseitigen Wechselmechanismus überträgt.

2. Fahrzeugantriebsvorrichtung nach Anspruch 1, wobei der zweite Getriebezug Folgendes umfasst;
ein erstes Antriebszahnrad, das sich zusammen mit der zweiten Eingangswelle dreht, und
ein erstes angetriebenes Zahnrad, das sich zusammen mit der zweiten Ausgangswelle dreht und das mit dem ersten Antriebszahnrad kämmt.

3. Fahrzeugantriebsvorrichtung nach Anspruch 2, wobei der erste Getriebezug Folgendes umfasst
ein zweites Antriebszahnrad, das sich zusammen mit der ersten Eingangswelle dreht und einen größeren Durchmesser als das erste Antriebszahnrad hat,
ein drittes Antriebszahnrad, das sich zusammen mit der ersten Eingangswelle dreht und einen größeren Durchmesser als das zweite Antriebszahnrad hat,
ein zweites angetriebenes Zahnrad, das so angeordnet ist, dass es mit Bezug zur ersten Ausgangswelle leerläuft und mit dem zweiten Antriebszahnrad kämmt,
ein drittes angetriebenes Zahnrad, das so angeordnet ist, dass es mit Bezug zur ersten Ausgangswelle leerläuft und mit dem zweiten Antriebszahnrad kämmt,
einen ersten Wechselmechanismus, der eines der ersten und zweiten Antriebszahnräder auswählt und zwischen dessen verbundenen Zustand und unverbundenen Zustand mit der ersten Ausgangswelle wechselt,
ein viertes Antriebszahnrad, das sich zusammen mit der ersten Eingangswelle dreht und einen größeren Durchmesser als das dritte Antriebszahnrad hat,
ein fünftes Antriebszahnrad, das sich zusammen mit der ersten Eingangswelle dreht und einen größeren Durchmesser als das vierte Antriebszahnrad hat,
ein viertes angetriebenes Zahnrad, das so angeordnet ist, dass es mit Bezug zur ersten Ausgangswelle leerläuft und mit dem vierten Antriebsrad kämmt,
ein fünftes angetriebenes Zahnrad, das so angeordnet ist, dass es mit Bezug zur ersten Ausgangswelle leerläuft und mit dem fünften Antriebszahnrad kämmt,
einen zweiten Wechselmechanismus, der eines der vierten oder fünften Antriebsräder auswählt und zwischen dessen verbundenen Zustand und unverbundenen Zustand mit der ersten Ausgangswelle wechselt.

4. Fahrzeugantriebsvorrichtung nach einem der Ansprüche 1 bis 3, weiter mit:
einem ersten Betätigungselement, das einen Wechselbetrieb des eingangswellenseitigen Wechselmechanismus, des ausgangswellenseitigen Wechselmechanismus oder des Gleitelementes durchführt,
wobei der eingangswellenseitigen Wechselmechanismus einen Wechselbetrieb in Verbindung mit einem Wechselbetrieb des ausgangswellenseitigen Wechselmechanismus durch das Gleitelement durchführt, und
wobei das erste Betätigungselement einen Wechselbetrieb durchführt an einer der folgenden Positionen:
einer ersten Position, in der das Mitlaufzahnrad mit dem eingangswellenseitigen Wechselmechanismus und dem ausgangswellenseitigen Wechselmechanismus verbunden ist, der eingangswellenseitige Wechselmechanismus im unverbundenen Zustand ist und der ausgangswellenseitige Wechselmechanismus im unverbundenen Zustand ist;
einer zweiten Position, in der das Mitlaufzahnrad nicht mit dem eingangswellenseitigen Wechselmechanismus und dem ausgangswellenseitigen Wechselmechanismus verbunden ist, der eingangswellenseitige Wechselmechanismus im unverbundenen Zustand ist und der ausgangswellenseitige Wechselmechanismus im verbundenen Zustand ist;
einer dritten Position, in der das Mitlaufzahnrad nicht mit dem eingangswellenseitigen Wechselmechanismus und dem ausgangswellenseitigen Wechselmechanismus verbunden ist, der eingangswellenseitige Wechselmechanismus im verbundenen Zustand ist und der ausgangswellenseitige Wechselmechanismus im verbundenen Zustand ist;
einer vierten Position, in der das Mitlaufzahnrad nicht mit dem eingangswellenseitigen Wechselmechanismus und dem ausgangswellenseitigen Wechselmechanismus verbunden ist, der eingangswellenseitige Wechselmechanismus im verbundenen Zustand ist und der Ausgangswellenseitige Wechselmechanismus im unverbundenen Zustand ist; und
einer fünften Position, in der das Mitlaufzahnrad nicht mit dem eingangswellenseitigen Wechselmechanismus und dem ausgangswellenseitigen Wechselmechanismus verbunden ist, der eingangswellenseitige Wechselmechanismus im unverbundenen Zustand ist und der ausgangswellenseitige Wechselmechanismus im unverbundenen Zustand ist.

5. Fahrzeugantriebsvorrichtung nach Anspruch 4, weiter mit:
einem zweiten Betätigungselement, das durch das Gleitelement und einen Öldurchtritt verbunden ist,
wobei das Gleitelement eine durch das zweite Betätigungselement gesteuerte Funktion zum Erhalten eines Öldruckes hat, um eine Wechselposition relativ zu dem eingangswellenseitigen Wechselmechanismus und zu dem ausgangswellenseitigen Wechselmechanismus umzuschalten,
wobei, wenn das Gleitelement den durch das zweite Betätigungselement gesteuerten Öldruck erhält, das erste Betätigungselement einen Wechselbetrieb durchführt mit einer der folgenden Position:
einer weiteren ersten Position, in der das Mitlaufzahnrad nicht mit dem eingangswellenseitigen Wechselmechanismus und dem ausgangswellenseitigen Wechselmechanismus verbunden ist, der eingangswellenseitige Wechselmechanismus im unverbundenen Zustand ist und der ausgangswellenseitige Wechselmechanismus im verbundenen Zustand ist;
einer weiteren zweiten Position in der das Mitlaufzahnrad nicht mit dem eingangswellenseitigen Wechselmechanismus und dem Ausgangswellenseitigen Wechselmechanismus verbunden ist, der eingangswellenseitige Wechselmechanismus im verbundenen Zustand ist und der Ausgangswellenseitige Wechselmechanismus im unverbundenen Zustand ist;
einer weiteren dritten Position in der das Mitlaufzahnrad nicht mit dem eingangswellenseitigen Wechselmechanismus und dem ausgangswellenseitigen Wechselmechanismus verbunden ist, der eingangswellenseitige Wechselmechanismus im unverbundenen Zustand ist und der ausgangswellenseitige Wechselmechanismus im unverbundenen Zustand ist, und
wobei während einer Bewegung von der weiteren ersten Position zu der weiteren zweiten Position der Eingangswellenseitige Wechselmechanismus in dem unverbundenen Zustand ist und der ausgangswellenseitige Wechselmechanismus in dem unverbundenen Zustand ist.

6. Fahrzeugantriebsvorrichtung nach Anspruch 5, wobei, wenn das Gleitelement den durch das zweite Bestätigungselement gesteuerten Öldruck nicht erhält, durchführt das erste Betätigungselement einen Wechselbetrieb an einer der ersten bis fünften Position.

7. Fahrzeugantriebsvorrichtung nach einem der Ansprüche 1 bis 3, weiter mit:
einem Eingangswellenbetätigungselement das einen Wechselbetrieb des eingangswellenseitigen Wechselmechanismus durchführt; und
einem Ausgangswellenbetätigungselement das einen Wechselbetrieb des ausgangswellenseitigen Wechselmechanismus durchführt,
wobei das Gleitelement einen Gleitbetrieb durchführt mit einer der folgenden Positionen:
einer ersten Position, in der das Mitlaufzahnrad mit dem eingangswellenseitigen Wechselmechanismus und dem ausgangswellenseitigen Wechselmechanismus verbunden ist und sowohl der eingangswellenseitige Wechselmechanismus als auch der ausgangswellenseitige Wechselmechanismus in einem unverbundenen Zustand sind;
einer zweiten Position in der das Mitlaufzahnrad nicht mit dem eingangswellenseitigen Wechselmechanismus und dem ausgangswellenseitigen Wechselmechanismus verbunden ist und entweder einer oder beide von dem eingangswellenseitigen Wechselmechanismus und Ausgangswellenseitigen Wechselmechanismus in einem unverbundenen Zustand sind; und
einer dritten Position, in der das Mitlaufzahnrad nicht mit dem eingangswellenseitigen Wechselmechanismus und dem ausgangswellenseitigen Wechselmechanismus verbunden ist und sowohl der eingangswellenseitige Wechselmechanismus als auch der ausgangswellenseitige Wechselmechanismus in einem verbundenen Zustand sind.

## Revendications

1. Dispositif d'entraînement de véhicule comprenant :
un premier train d'engrenages (22-25, 27-30, 33) qui change une vitesse de rotation d'un premier arbre d'entrée (21), auquel la puissance de rotation d'un moteur à combustion interne (2) est transmise par le biais d'un embrayage (3), afin de transmettre la puissance à un premier arbre de sortie (26) et pour effectuer une commutation entre une pluralité de rapports d'engrenage ;
un second train d'engrenages (37, 42) qui change une vitesse de rotation d'un second arbre d'entrée (36), auquel la puissance de rotation d'un moteur électrique (5) est transmise, afin de transmettre la puissance à un second arbre de sortie (41) et a un rapport d'engrenage supérieur à celui du premier train d'engrenages ;
un mécanisme de commutation du côté de l'arbre d'entrée (43) qui effectue une commutation entre un état relié et un état non relié au premier arbre d'entrée et au second arbre d'entrée ;
un mécanisme de commutation du côté de l'arbre de sortie qui effectue une commutation entre un état relié et un état non relié au premier arbre de sortie et au second arbre de sortie ;
un élément de coulisse (46) qui coulisse en réponse à une opération de commutation du mécanisme de commutation du côté de l'arbre d'entrée et du mécanisme de commutation du côté de l'arbre de sortie ; et
un engrenage intermédiaire (47) qui est maintenu en rotation au niveau de l'élément de coulisse (46), reçoit la puissance de rotation du premier arbre d'entrée par le biais du mécanisme de commutation du côté de l'arbre d'entrée selon une position de coulisse de l'élément de coulisse et transmet la puissance de rotation au second arbre de sortie par le biais du mécanisme de commutation du côté de l'arbre de sortie.

2. Dispositif d'entraînement de véhicule selon la revendication 1, dans lequel le second train d'engrenages comprend :
un premier engrenage d'entraînement qui tourne conjointement avec le second arbre d'entrée, et
un premier engrenage entraîné qui tourne conjointement avec le second arbre de sortie et qui s'engrène avec le premier engrenage d'entraînement.

3. Dispositif d'entraînement de véhicule selon la revendication 2, dans lequel le premier train d'engrenages comprend :
un deuxième engrenage d'entraînement qui tourne conjointement avec le premier arbre d'entrée et a un plus grand diamètre que celui du premier engrenage d'entraînement,
un troisième engrenage d'entraînement qui tourne conjointement avec le premier arbre d'entrée et a un plus grand diamètre que celui du deuxième engrenage d'entraînement,
un deuxième engrenage entraîné qui est agencé pour tourner librement par rapport au premier arbre de sortie et s'engrène avec le deuxième engrenage d'entraînement,
un troisième engrenage entraîné qui est agencé pour tourner librement par rapport au premier arbre de sortie et s'engrène avec le troisième engrenage d'entraînement,
un premier mécanisme de commutation qui sélectionne l'un parmi le deuxième engrenage entraîné et le troisième engrenage entraîné et effectue une commutation entre un état relié et son état non relié au premier arbre de sortie,
un quatrième engrenage d'entraînement qui tourne conjointement avec le premier arbre d'entrée et a un plus grand diamètre que celui du troisième engrenage d'entraînement,
un cinquième engrenage d'entraînement qui tourne conjointement avec le premier arbre d'entrée et a un plus grand diamètre que celui du quatrième engrenage d'entraînement,
un quatrième engrenage d'entraîné qui est agencé afin de tourner librement par rapport au premier arbre de sortie et s'engrène avec le quatrième engrenage d'entraînement,
un cinquième engrenage entraîné qui est agencé afin de tourner librement par rapport au premier arbre de sortie et s'engrène avec le cinquième engrenage d'entraînement, et
un second mécanisme de commutation qui sélectionne l'un parmi le quatrième engrenage entraîné et le cinquième engrenage entraîné et effectue une commutation entre un état relié et son état non relié au premier arbre de sortie.

4. Dispositif d'entraînement de véhicule selon l'une quelconque des revendications 1 à 3, comprenant en outre :
un premier actionneur qui réalise une opération de commutation du mécanisme de commutation du côté de l'arbre d'entrée, du mécanisme de commutation du côté de l'arbre de sortie ou de l'élément de coulisse,
dans lequel le mécanisme de commutation du côté de l'arbre d'entrée réalise une opération de commutation conjointement avec une opération de commutation du mécanisme de commutation du côté de l'arbre de sortie par le biais de l'élément de coulisse, et
dans lequel le premier actionneur réalise une opération de commutation dans l'une parmi :
une première position dans laquelle l'engrenage intermédiaire est raccordé au mécanisme de commutation du côté de l'arbre d'entrée et au mécanisme de commutation du côté de l'arbre de sortie, le mécanisme de commutation du côté de l'arbre d'entrée est à l'état non relié, et le mécanisme de commutation du côté de l'arbre de sortie est à l'état non relié ;
une deuxième position dans laquelle l'engrenage intermédiaire n'est pas raccordé au mécanisme de commutation du côté de l'arbre d'entrée ni au mécanisme de commutation du côté de l'arbre de sortie, le mécanisme de commutation du côté de l'arbre d'entrée est à l'état non relié, et le mécanisme de commutation du côté de l'arbre de sortie est à l'état relié ;
une troisième position dans laquelle l'engrenage intermédiaire n'est pas raccordé au mécanisme de commutation du côté de l'arbre d'entrée ni au mécanisme de commutation du côté de l'arbre de sortie, le mécanisme de commutation du côté de l'arbre d'entrée est à l'état relié, et le mécanisme de commutation du côté de l'arbre de sortie est à l'état relié ;
une quatrième position dans laquelle l'engrenage intermédiaire n'est pas raccordé au mécanisme de commutation du côté de l'arbre d'entrée ni au mécanisme de commutation du côté de l'arbre de sortie, le mécanisme de commutation du côté de l'arbre d'entrée est à l'état relié, et le mécanisme de commutation du côté de l'arbre de sortie est à l'état non relié ; et
une cinquième position dans laquelle l'engrenage intermédiaire n'est pas raccordé au mécanisme de commutation du côté de l'arbre d'entrée ni au mécanisme de commutation du côté de l'arbre de sortie, le mécanisme de commutation du côté de l'arbre d'entrée est à l'état non relié, et le mécanisme de commutation du côté de l'arbre de sortie est à l'état non relié.

5. Dispositif d'entraînement de véhicule selon la revendication 4, comprenant en outre :
un second actionneur qui est raccordé par le biais de l'élément de coulisse et d'un passage d'huile,
dans lequel l'élément de coulisse a une fonction consistant à recevoir une pression d'huile, contrôlée par le second actionneur, pour déplacer une position de commutation par rapport au mécanisme de commutation du côté de l'arbre d'entrée et au mécanisme de commutation du côté de l'arbre de sortie,
dans lequel lorsque l'élément de coulisse reçoit la pression d'huile contrôlée par le second actionneur, le premier actionneur réalise une opération de commutation dans l'une parmi :
une autre première position dans laquelle l'engrenage intermédiaire n'est pas raccordé au mécanisme de commutation du côté de l'arbre d'entrée ni au mécanisme de commutation du côté de l'arbre de sortie, le mécanisme de commutation du côté de l'arbre d'entrée est à l'état non relié, et le mécanisme de commutation du côté de l'arbre de sortie est à l'état relié ;
une autre deuxième position dans laquelle l'engrenage intermédiaire n'est pas raccordé au mécanisme de commutation du côté de l'arbre d'entrée ni au mécanisme de commutation du côté de l'arbre de sortie, le mécanisme de commutation du côté de l'arbre d'entrée est à l'état relié, et le mécanisme de commutation du côté de l'arbre de sortie est à l'état non relié ; et
une autre troisième position dans laquelle l'engrenage intermédiaire n'est pas raccordé au mécanisme de commutation du côté de l'arbre d'entrée ni au mécanisme de commutation du côté de l'arbre de sortie, le mécanisme de commutation du côté de l'arbre d'entrée est à l'état non relié et le mécanisme de commutation du côté de l'arbre de sortie est à l'état non relié, et
dans lequel pendant un mouvement de l'autre première position à une autre deuxième position, le mécanisme de commutation du côté de l'arbre d'entrée est à l'état non relié et le mécanisme de commutation du côté de l'arbre de sortie est à l'état non relié.

6. Dispositif d'entraînement de véhicule selon la revendication 5, dans lequel lorsque l'élément de coulisse ne reçoit pas la pression d'huile, contrôlée par le second actionneur, le premier actionneur réalise une opération de commutation dans l'une de la première position à la cinquième position.

7. Dispositif d'entraînement de véhicule selon l'une quelconque des revendications 1 à 3, comprenant en outre :
un actionneur d'arbre d'entrée qui réalise une opération de commutation du mécanisme de commutation du côté de l'arbre d'entrée ; et
un actionneur d'arbre de sortie qui réalise une opération de commutation du mécanisme de commutation du côté de l'arbre de sortie,
dans lequel l'élément de coulisse réalise une opération de coulisse dans l'une parmi :
une première position dans laquelle l'engrenage intermédiaire est raccordé au mécanisme de commutation du côté de l'arbre d'entrée et au mécanisme de commutation du côté de l'arbre de sortie et à la fois le mécanisme de commutation du côté de l'arbre d'entrée et le mécanisme de commutation du côté de l'arbre de sortie sont à l'état non relié ;
une deuxième position dans laquelle l'engrenage intermédiaire n'est pas raccordé au mécanisme de commutation du côté de l'arbre d'entrée ni au mécanisme de commutation du côté de l'arbre de sortie et l'un ou les deux parmi le mécanisme de commutation du côté de l'arbre d'entrée et le mécanisme de commutation du côté de l'arbre de sortie est / sont à l'état non relié ; et
une troisième position dans laquelle l'engrenage intermédiaire n'est pas raccordé au mécanisme de commutation du côté de l'arbre d'entrée ni au mécanisme de commutation du côté de l'arbre de sortie et les deux parmi le mécanisme de commutation du côté de l'arbre d'entrée et le mécanisme de commutation du côté de l'arbre de sortie sont à l'état relié.
